# EUROPÄISCHE PATENTSCHRIFT

(11) **EP 2 584 504 B1**
(45) Veröffentlichungstag und Bekanntmachung des Hinweises auf die Patenterteilung: **06.04.2016**
(21) Anmeldenummer: 11185885.8
(22) Anmeldetag: 20.10.2011
(51) Int. Cl.: G06Q 10/08, G01C 21/00

(54) **Automatisches Zuordnen eines Suchgebiets zu einer Suchanfrage**
Automatic allocation of a search area to a search request
Attribution automatique d'une zone de recherche à une demande de recherche

(43) Veröffentlichungstag der Anmeldung: 24.04.2013
(73) Patentinhaber: Deutsche Post AG, 53113 Bonn (DE)
(72) Erfinder: Josefiak, Frank, 53177 Bonn Bad Godesberg (DE); Petkov, Filip, 50968 Köln (DE)
(74) Vertreter: Cohausz & Florack

(56) Entgegenhaltungen:
- WO-A2-02/097579
- US-A1- 2002 156 643
- US-A1- 2003 036 935
- US-A1- 2003 084 125
- US-B1- 6 879 962

## Beschreibung

### Gebiet der Erfindung

Die vorliegende Erfindung betrifft unter anderem ein Verfahren, eine Vorrichtung, ein System und ein Programm zum Auswählen eines oder mehrerer Logistikdatensätzen, insbesondere durch den Einsatz von Techniken der semantischen Suche.

### Hintergrund der Erfindung

In jüngster Zeit hat die (Echtzeit-)Überwachung von Sendungen und/oder von Transporteinheiten zum Transport von Sendungen zunehmend an Bedeutung gewonnen. Dazu werden die Sendungen und die Transporteinheiten beispielsweise mit elektronischen Geräten ausgestattet, die für die Überwachung relevante Kenngrößen erfassen und drahtlos (beispielsweise über ein Mobilfunknetz) an eine Datenbank eines Datenbankservers übermitteln können, von wo sie beispielsweise von dem für die Sendung verantwortlichen Logistikunternehmen oder dem Kunden abgerufen werden können. Auch können zur Verfolgung von Sendungen sogenannte Scanpositionen vorgesehen sein; sobald eine Sendung eine solche Scanposition passiert, wird beispielsweise als letzte bekannte Position der Sendung die Scanposition in der Datenbank gespeichert.

Um die Sendungen und/oder Transporteinheiten eines Logistikunternehmens zu überwachen, kann ein Disponent des Logistikunternehmens beispielsweise eine entsprechende Suchanfrage, in der die Sendung bzw. die Transporteinheit identifiziert wird, an die Datenbank stellen. Als Ergebnis der Suchanfrage werden dem Disponenten dann beispielsweise die Positionen der Sendungen und/oder Transporteinheiten des Logistikunternehmens als Tabelle mit Adressangaben der jeweiligen Scanpositionen, die die jeweilige Sendung und/oder Transporteinheit bereits passiert hat, zum Beispiel jeweils mit einer Zeitangabe, die angibt, wann die jeweilige Scanposition passiert wurde, und/oder auf einer Karte angezeigt.

Oft ist ein Disponent jedoch nur an Informationen über Sendungen und/oder Transporteinheiten in einem bestimmten geographischen Gebiet interessiert und wählt deshalb nur einen dem Gebiet entsprechenden Kartenausschnitt zur Anzeige der Ergebnisse der Suchanfrage aus. Dies kann dazu führen, dass dem Disponenten nur ein Teil der als Ergebnis der Suchanfrage erhaltenen Informationen tatsächlich angezeigt wird oder dass der Kartenausschnitt zur Anzeige aller Ergebnisse automatisch verschoben oder vergrößert wird. Dies ist unter anderem nachteilig, da die Abarbeitung der Suchanfrage durch das Datenbanksystem mehr Rechenzeit beansprucht als für die Ermittlung der tatsächlich vom Disponenten benötigten Informationen notwendig gewesen wäre. Dies ist insbesondere bei Servern und/oder Rechnerwolken nachteilig, bei denen viele Benutzer gleichzeitig auf die Datenbankdienste zugreifen können. Des Weiteren ist das automatische Ändern des Kartenausschnitts wenig benutzerfreundlich und kann dazu führen, dass weitere Kartenausschnitte (ggfs. kostenpflichtig) von einem Kartendienstanbieter bereitgestellt werden müssen.

Aus der US 2003/0036935 A1 ist ein System und ein Verfahren zum Zuordnen von Frachtgutaufträgen bekannt. Die Aufträge werden dabei an mobile Beförderungseinheiten bzw. Frachtgutauftrag-Kandidaten, wie Schiffe, Flugzeuge oder Lkw verteilt, welche geortet werden können. Auf Basis verschiedener Informationen kann eine passende mobile Beförderungseinheit für einen Benutzer gefunden werden. Anschließend werden aus diesen passenden mobilen Beförderungseinheiten diejenigen identifiziert, deren Positionen innerhalb einer bestimmten Distanz zur Abholstelle liegen. Das Management-System informiert dann den Versender des Auftrags von den gefundenen passenden mobilen Beförderungseinheiten.

Aus der US 6,879,962 B1 ist ein Logistikverfahren bekannt, in dem eine Karte des Tätigkeitsbereichs angezeigt werden kann, wobei die Kartenansicht kann durch Zoomen oder Kontrollieren verschiedener Ebenen variiert werden kann. Auch kann der Benutzer einzelne Transporte auswählen und Daten des Transports abfragen. Diesen Transporten ist auch eine mobile Position zugeordnet.

Aus der US 2003/0084125 A1 ist ein Infonnationsaustauschsystem bekannt, mit welchem die Versender ihren Bedarf und die Beförderer ihre Kapazitäten austauschen können. Der Benutzer einer Befördereinheit kann Anfragen stellen, ob Bedarf besteht. Diese Anfrage wird von einer Logikeinheit empfangen, welche dann passenden Bedarf von Versendern heraussucht. Dabei kann als Kriterium eine Abholstelle im Radius von 10 Meilen der Befördereinheit dienen.

Aus der WO 02/097579 A2 ist ein System bekannt, um die Verfügbarkeit von mobilen Anlagen zu bestimmen. Die mobilen Anlagen besitzen dazu ein Ortungsgerät. Ein Benutzer kann insbesondere eine Suche von verfügbaren mobilen Anlagen in einem Radius um eine bestimmte Position, an der diese benötigt werden, durchführen.

Die US 2002/156643 A1 beschreibt ein Infonnationsterminal mit einem Trackingmodul zur Verfolgung der Position eines Transportmediums. Insbesondere wird eine Suche von Versendern, die sich innerhalb einer vorbestimmten Distanz von einem Lastwagen befinden, offenbart. Weiter wird ein Kartenausschnitt mit der aktuellen Position des Lastwagens und die Versender betreffenden Logistikdatensätzen angezeigt.

### Allgemeine Beschreibung der Erfindung

Die vorliegende Erfindung hat sich daher unter anderem die Aufgabe gestellt, die oben genannten Nachteile zu überwinden.

Die Aufgabe wird gelöst durch ein Verfahren gemäß Anspruch 1, eine Vorrichtung gemäß Anspruch 11, ein System gemäß Anspruch 12 und ein Programm gemäß Anspruch 13. Weitere Ausführurigsformen sind den abhängigen Ansprüchen zu entnehmen.

Das erfindungsgemäße Verfahren kann von einer oder mehreren Datenverarbeitungsvorrichtungen ausgeführt werden. Beispiele für eine Datenverarbeitungsvorrichtung sind ein Computer, ein Personalcomputer, ein tragbarer Computer, ein Thin-Client, ein persönlicher digitaler Assistent, ein Mobiltelefon und/oder jedes andere elektronisches Gerät, das zumindest einen Prozessor aufweist.

Insbesondere kann das erfindungsgemäße Verfahren von einem oder mehreren Servern ausgeführt werden, zum Beispiel von einem oder mehreren Servern eines Suchdiensteanbieters für Logistikdaten. Das Verfahren kann auch von den Servern und zumindest von einem mit den Servern verbundenen Client ausgeführt werden. Unter einem Server soll insbesondere eine Datenverarbeitungseinheit in einem Netzwerk verstanden werden, die mit einer oder mehreren Datenverarbeitungseinheiten, den Clients, über das Netzwerk kommuniziert, um ihnen spezielle Dienste und/oder Rechenleistung bereitzustellen. In einer solchen Client-Server-Architektur können die von dem Server bereitgestellten speziellen Dienste und/oder die Rechenleistung von mehreren Clients genutzt werden, so dass die Clients selber beispielsweise weniger eigene Rechenleistung vorhalten müssen. Ein Server und ein Client können sowohl eine Datenverarbeitungsvorrichtung als auch ein Programm bezeichnen, das auf der Datenverarbeitungsvorrichtung ausgeführt wird. Das Netzwerk ist beispielsweise ein lokales Netzwerk, ein Weitverkehrsnetzwerk, ein virtuelles Netzwerk, ein Funknetzwerk, eine Telefonnetzwerk und/oder das Internet. Die Kommunikation erfolgt beispielsweise kabellos und/oder kabelgebunden.

Die Server können beispielsweise Datenbankserver sein. Beispiele für einen Datenbankserver sind ein Microsoft SQL Server, ein Oracle Server und ein MySQL Server. Die Server können beispielsweise Teil (beispielsweise eine "Komponente") einer sogenannten Rechnerwolke sein, welche Datenverarbeitungsressourcen verschiedenen Benutzern über ein Netzwerk dynamisch zur Verfügung stellen kann. Unter einer Rechnenvolke soll insbesondere eine Datenverarbeitungsinfrastruktur gemäß der Definition des "National Institute for Standards and Technology" (NIST) für den englischen Begriff "Cloud Computing" verstanden werden Ein Beispiel für eine Rechnenvolke ist die Microsoft Windows Azure Plattform.

Unter einer mobilen Position soll insbesondere eine veränderliche Position einer beweglichen Einheit, zum Beispiel einer Sendung oder einer Transporteinheit, verstanden werden. Beispiele für eine Sendung sind ein Brief, ein Einschreiben, ein Päckchen, ein Paket oder eine Frachtlieferung. Beispiele für eine Transporteinheit sind ein Lastkraftwagen (LKW), ein Personenkraftwagen (PKW), ein Schiff, ein Flugzeug, ein Transporter, ein Zug, ein Zugwaggon, ein Container und eine Wechselbrücke.

Die mobile Position einer beweglichen Einheit kann beispielsweise in regelmäßigen Zeitabständen in einer Datenbank aktualisiert werden. Die mobile Position einer beweglichen Einheit kann beispielsweise in unregelmäßigen Zeitabständen in einer Datenbank aktualisiert werden, zum Beispiel nur wenn sich die mobile Position der beweglichen Einheit verändert. Eine mobile Position kann beispielsweise in Form von Positionskoordinaten, wie geographische Breiten- und Längenangaben oder Positionskoordinaten eines Satellitennavigationssystems (z.B. des Global Positioning Systems (GPS) oder des Galileo-Systems, z.B. Positionskoordinaten gemäß des World Geodetic System 1984 Referenzsystems) oder eines Mobilfunksystems, in der Datenbank gespeichert werden. Die Datenbank ist beispielsweise eine Positionsdatenbank, eine Fuhrparkdatenbank, eine Telematikdatenbank, eine Sendungsverfolgungsdatenbank und/oder eine Logistikdatenbank. Die mobile Position kann beispielsweise eine aktuelle Position der beweglichen Einheit sein, oder die letzte bekannte Position der beweglichen Einheit, oder eine historische Position der beweglichen Einheit.

Unter einer Datenquelle soll insbesondere eine Datenbank verstanden werden, wie eine Positionsdatenbank, eine Telematikdatenbank, eine Fuhrparkdatenbank, eine Sendungsverfolgungsdatenbank und/oder eine Logistikdatenbank. Eine Datenquelle kann aber auch ein fahrzeugeigener Positionssender und/oder ortsfeste oder mobile Sendungskontrollstationen (z.B. zur Erfassung von Scanpositionen) sein.

Ein Logistikdatensatz umfasst beispielsweise geobasierte Informationen. Ein Logistikdatensatz ist beispielsweise einer oder mehreren beweglichen Einheiten zugeordnet, deren Position(en) dem Logistikdatensatz zugeordnet oder zuordenbar ist. Eine Position ist einem Logistikdatensatz zum Beispiel zugeordnet oder zuordenbar, wenn der Logistikdatensatz die Position oder einen Verweis auf einen Datensatz mit der Position umfasst. Der Datensatz mit der Position ist beispielsweise in einer anderen Datenbank als der Logistikdatensatz gespeichert.

Zum Beispiel kann der Logistikdatensatz eine oder mehrere Kenngrößen der zugeordneten beweglichen Einheiten umfassen. Beispiele für Kenngrößen einer beweglichen Einheit sind eine Kennung der beweglichen Einheit, der Sendungstyp, der Transporteinheitstyp, eine Identifikation des verantwortlichen Logistikunternehmens, ein oder mehrere zeitbezogene Kriterien, die aktuelle Geschwindigkeit, die Durchschnittsgeschwindigkeit, die gegenwärtige CO₂ Emission, die Temperatur, die Luftfeuchtigkeit, die Startadresse, die Zieladresse, die geplante Route, die Beladung, die aktuelle mobile Position und/oder die vorhergehende mobile Positionen.

Das Suchkriterium für die Suchanfrage des Benutzers betrifft beispielsweise eine oder mehrere der Kenngrößen, insbesondere ist auch eine Verknüpfung von mehreren Kenngrößen denkbar. Zum Beispiel trifft das Suchkriterium nur auf Logistikdatensätze zu, die Transporteinheiten eines bestimmten Spediteurs oder Sendungen mit einer bestimmten Zieladresse zugeordnet sind.

Das Suchkriterium wird durch eine Benutzereingabe erhalten. In einer Client-Server-Architektur wird das Suchkriterium zum Beispiel von dem Benutzer an einem Client eingegeben und von dem Client an einen oder mehrere Server des Suchdienstanbieters als Suchanfrage des Benutzers übergeben.

Das Suchgebiet ist beispielsweise ein geographisch begrenztes Gebiet, zum Beispiel zumindest ein Teil der Erdoberfläche, zum Beispiel ein durch politische Grenzen begrenzter Teil der Erdoberfläche, wie ein Staatsgebiet. Insbesondere kann das geographisch begrenzte Gebiet kleiner als die gesamte Erdoberfläche sein, also beispielsweise nur ein Teil eines auf einer Weltkarte darstellbaren Gesamtgebiets. Das Zuordnen des Suchgebiets zu der Suchanfrage kann beispielsweise durch eine Verknüpfung des Suchkriteriums mit einer Repräsentation des Suchgebiets erfolgen. Eine Repräsentation des Suchgebiets ist beispielsweise ein geschlossener Koordinatenzug, ein Radius um eine Position und/oder ein Intervall entsprechender geographischer Bereiten- und Längenangaben. Das Suchgebiet ist beispielsweise ein zumindest im Wesentlichen rechteckförmiges Gebiet, zum Beispiel ein Viereck in der euklidischen oder in einer nicht-euklidischen Geometrie.

Das Zuordnen des Suchgebiets zu der Suchanfrage erfolgt automatisch. Zum Beispiel wird das Suchgebiet der Suchanfrage für den Benutzer automatisch bestimmt und der Suchanfrage zugeordnet. Vorzugsweise erfolgt das automatische Zuordnen und/oder Bestimmen des Suchgebiets, ohne dass der Benutzer die Suchanfrage zumindest ausdrücklich auf ein geographisches Gebiet begrenzt. Zum Beispiel wird das Suchgebiet geographisch auf ein Gebiet begrenzt, an dem der Benutzer zumindest mit hoher Wahrscheinlichkeit interessiert ist. Zum Beispiel wird das Suchgebiet aus dem dem Benutzer angezeigten Kartenausschnitt automatisch bestimmt. Zum Beispiel erfolgt die automatische Zuordnung, sobald der Benutzer den angezeigten Kartenausschnitt aufgerufen bzw. verändert hat und/oder sobald der Benutzer eine neue Suchanfrage ausgelöst bzw. eine Suchanfrage zurückgesetzt hat. Dies ist unter anderem vorteilhaft, um die als Ergebnis der Suchanfrage ausgegebenen Informationen auf Informationen zu reduzieren, die zumindest mit einer hohen Wahrscheinlichkeit im Interesse des Benutzers liegen.

In einer Client-Server-Architektur kann das automatische Zuordnen des Suchgebiets zum einen clientseitig und zum anderen serverseitig erfolgen.

Die Suchanfrage mit dem Suchkriterium und dem zugeordneten Suchgebiet wird beispielsweise an eine oder mehrere Auswahleinheiten übergeben. Das Auswählen der Logistikdatensätze kann durch die Auswahleinheiten erfolgen, zum Beispiel durch einen Vergleich des Suchkriteriums mit den von den Logistikdatensätzen umfassten Kenngrößen und einen Abgleich des Suchgebiets mit der den Logistikdatensätzen zugeordneten oder zuordenbaren mobilen Position. Die Auswahleinheiten sind beispielsweise Datenbankkomponenten einer Rechnerwolke und/oder Datenbankserver oder Teile davon.

Das Auswählen der Logistikdatensätze kann beispielsweise durch eine Suche mit einem geeigneten Suchalgorithmus in einer oder mehreren Datenbanken erfolgen. Zum Beispiel kann auf eine Suchmaschine mit einem geeigneten Suchalgorithmus zurückgegriffen werden, wobei der Suchalgorithmus (oder eine andere Einheit) die Daten beispielsweise indexiert und den Index oder die Indexe dann zur Laufzeit für die Suchanfrage einsetzt. Dies ist zum Beispiel vorteilhaft, wenn die Anzahl der für die Suche in den Datenbanken gegebenenfalls notwendigen Verknüpfungsoperationen (sog. "JOIN"- Operationen) groß ist.

Beispiele für mögliche Suchalgorithmen sind Suche in Listen, lineare Suche, binäre Suche, Intervallsuche, Suche in Bäumen, heuristische Suche, A*, IDA*, bidirektionale Suchschemata, das Minimax-Verfahren und/oder Alpha-Beta-Suche. Bevorzugt können selbstoptimierende Suchalgorithmen, insbesondere für große Datenmengen, heuristische Suchalgorithmen, evolutionäre Suchalgorithmen (z.B. selbstlernende Algorithmen) und/oder TF-IDF (Term Frequency-Inverse Document Frequency) basierte Algorithmen verwendet werden.

Die ausgewählten Logistikdatensätze können aus unterschiedlichen Datenquellen stammen, zum Beispiel aus Datenbanken unterschiedlicher Anbieter. Zum Beispiel können die Logistikdatensätze von Transporteinheiten in einer anderen Datenbank als die Logistikdatensätze von Sendungen gespeichert sein. Die den Logistikdatensätzen zugeordneten oder zuordenbaren Positionen können ebenfalls aus unterschiedlichen Datenquellen, zum Beispiel aus Datenbanken unterschiedlicher Anbieter stammen. Zum Beispiel sind die den Transporteinheiten eines Logistikunternehmens zugeordneten Logistikdatensätze in einer Telematikdatenbank eines Telematikdiensteanbieters als Telematikdatensätze gespeichert. Zum Beispiel bieten Hersteller von LKWs solche Telematikdienste an. Die den Sendungen, für die das Logistikuntemehmen verantworthch ist, zugeordneten Logistikdatensätze sind zum Beispiel in einer Sendungsverfolgungsdatenbank des Logistikunternehmens oder eines Sendungsverfolgungsdienstanbieters als Sendungsverfolgungsdätensätze gespeichert. Als Ergebnis der Suchanfrage können somit Informationen betreffend Logistikdatensätze aus Datenbanken unterschiedlicher Anbieter ausgeben werden. Dies ist unter anderem vorteilhaft, um eine anbieter- und/oder datenbankübergreifende Suche zu ermöglichen.

Zum Beispiel kann die Suchanfrage durch Datenbankserver verschiedener Telematikdiensteanbieter und/oder Sendungsverfolgungsdienstanbieter abgearbeitet werden. In einer Client-Server-Architektur können ein oder mehrere Server des Suchdiensteanbieters die Suchanfrage zum Beispiel an Datenbankserver verschiedener Telematikdiensteanbieter und/oder Sendungsverfolgurigsdiensteanbieters weiterleiten und die Informationen betreffend die Logistikdatensätze als Ergebnis der Suchanfrage aus den verschiedenen Datenbanken zusammenfassen.

Durch das automatische Zuordnen und/oder Bestimmen des Suchgebiets wird das Suchkriterium geo-semantisch mit dem Suchgebiet verknüpft und der von der Suchanfrage abgedeckte Suchraum verkleinert. Dies ist unter anderem vorteilhaft, um die Anzahl der (zumindest zunächst) zu durchsuchenden Logistikdatensätze effektiv zu minimieren . Des Weiteren ist dies unter anderem vorteilhaft, um die Rechenzeit für die Abarbeitung der Suchanfrage, zu reduzieren (d.h. im Vergleich zur Rechenzeit für die Abarbeitung der Suchanfrage ohne die geo-semantische Verknüpfung des Suchkriteriums mit dem Suchgebiet).

Durch das automatische Zuordnen und/oder Bestimmen des Suchgebiets kann zum Beispiel eine Vorauswahl der Logistikdatensätze auf solche Logistikdatensätze getroffen werden, deren zugeordnete oder zuordenbare Position in dem der Suchanfrage zugeordneten Suchgebiet liegt. Eine Vorauswahl kann beispielsweise auch aufgrund der geographischen Beschaffenheit des Suchgebiets getroffen werden. Zum Beispiel befinden sich in einem Suchgebiet, das vollständig im indischen Ozean liegt, zumindest mit einer hohen Wahrscheinlichkeit Schiffe und Container, jedoch keine Landfahrzeuge, so dass die Vorauswahl der Logistikdatensätze nur Logistikdatensätze umfasst, die Schiffen und Containern zugeordnet sind. Zum Beispiel beschränkt die Vorauswahl die Suche auf Datenbanken, die Schiffen und Containern zugeordnete Logistikdatensätze enthalten. Nur innerhalb der Vorauswahl können dann beispielsweise Logistikdatensätze ausgewählt werden, auf die das Suchkriterium zutrifft. Dadurch muss eine rechenintensive und/oder zeitintensive Volltextsuche beispielsweise nur noch innerhalb der Kenngrößen der bereits vorausgewählten Logistikdatensätze erfolgen. Die als Ergebnis der Suchanfrage ausgegebenen Informationen sind beispielsweise eine oder mehrere der von den ausgewählten Logistikdatensätzen umfassten Kenngrößen und/oder die den Logistikdatensätzen zugeordneten oder zuordenbaren Positionen. Die Informationen werden beispielsweise von den Auswahleinheiten ausgegeben und/oder zur Ausgabe bereitgestellt. In einer Client-Server-Architektur erfolgt das Ausgeben der Informationen beispielsweise durch eine Weiterleitung der Informationen über das Netzwerk an den Client. Durch die Reduzierung der als Ergebnis der Such anfrage auszugebenden Informationen, kann somit auch die in einer Client-Server-Architektur zu übertragende Datenmenge minimiert werden. Dies ist unter anderem vorteilhaft, um den für die Suchanfrage notwendigen Datenverkehr zu reduzieren und zum Beispiel Clients mit einer langsamen Netzwerkverbindung, wie zum Beispiel General Packet Radio Service (GPRS-) Verbindungen, einsetzen zu können.

Eine beispielhafte erfindungsgemäße Vorrichtung umfasst Mittel zur Ausführung des erfindungsgemäßen Verfahrens. Die Vorrichtung ist beispielsweise eine Datenverarbeitungsvorrichtung, zum Beispiel ein Server oder ein Client. Die Vorrichtung ist beispielsweise eine Rechnerwolke.

Eine beispielhafte erfindungsgemäße Vorrichtung umfasst zum Beispiel zumindest einen Prozessoren, und zumindest einen Speicher, wobei in dem Speicher ein Programm umfassend Programmanweisungen gespeichert ist, wobei der Speicher und das Programm eingerichtet sind, um, mit dem Prozessor, die Vorrichtung zumindest zu veranlassen, das erfindungsgemäße Verfahren auszuführen, wenn das Programm auf dem Prozessor ausgeführt wird. Die Vorrichtung ist beispielsweise softwaremäßig eingerichtet, um das Verfahren ausführen zu können. Unter softwaremäßig eingerichtet soll dabei insbesondere die Vorbereitung der Vorrichtung verstanden werden, die notwendig ist, um ein Verfahren beispielsweise in Form eines Programms auf dem Prozessor ausführen zu können.

Unter einem Prozessor sollen unter anderem eine oder mehrere Kontrolleinheiten, Mikroprozessoren, Mikrokontrolleinheiten wie Mikrocontroller, digitale Signalprozessoren (DSP), Anwendungsspezifische Integrierte Schaltungen (ASIC) oder Field Programmable Gate Arrays (FPGA) verstanden werden.

Ein Speicher ist beispielsweise ein Programmspeicher und/oder ein Hauptspeicher des Prozessors. Unter einem Programmspeicher soll unter anderem ein nicht-flüchtiger Speicher und unter einem Hauptspeicher ein flüchtiger- oder ein nicht-flüchtiger-Speicher, insbesondere ein Speicher mit wahlfreiem-Zugriff (RAM) und/oder ein Flash-Speicher, verstanden werden. Nicht-flüchtige Speicher sind z.B. Speicher mit wahtfreiem-Zugriff(RAM) wie z.B. NOR-Flash-Speicher oder mit sequentiellen Zugriff wie z.B. NAND-Flash-Speicher und/oder Speicher mit Nur-Lese-Zugriff(ROM) wie z.B. EPROM-, EEPROM-, oder Rom-Speicher. Der Speicher kann beispielsweise gegenständlich ausgebildet sein.

Ein beispielhaftes erfindungsgemäßes System umfasst eine oder mehrere Vorrichtungen mit Mitteln zur Ausführung des erfindungsgemäßen Verfahrens. Zum Beispiel umfasst das System eine oder mehrere erfindungsgemäße Vorrichtungen oder eine oder mehrere Vorrichtungen (beispielsweise einen Server und einen Client), die zusammengenommen die erfindungsgemäßen Funktionen erbringen. Beispielsweise kann eine erste Vorrichtung das Suchkriterium erhalten und der Suchanfrage das Suchgebiet zuordnen, und eine zweite Vorrichtung kann das Auswählen der ein oder mehreren Logistikdatensätze und das Ausgeben von Informationen betreffend die ausgewählten Logistikdatensätze übernehmen. Diese Funktionen können aber auch anders auf die beiden (oder auch noch weitere) Vorrichtungen verteilt werden und/oder auch zumindest teilweise von mehreren Vorrichtungen gemeinsam erbracht werden.

Ein beispielhaftes erfindungsgemäßes Programm umfasst Programmanweisurigen, um das erfindungsgemäße Verfahren zumindest teilweise auszuführen, wenn das Programm auf einem Prozessor ausgeführt wird. Ein Programm ist beispielsweise über ein Netzwerk wie ein lokales Netzwerk, ein Weitverkehrsnetzwerk, ein virtuelles Netzwerk, ein Funknetzwerk, eine Telefonnetzwerk und/oder das Internet verteilbar. Ein Programm kann zumindest teilweise Software und/oder Firmware eines Prozessors sein. Zum Beispiel ist das erfindungsgemäße Programm in einem Speicher der erfindungsgemäßen Vorrichtung gespeichert.

Ein beispielhaftes Speichermedium umfasst das erfindungsgemäße Programm. Das Speichermedium ist beispielsweise ein computerlesbares Speichermedium, welches das erfindungsgemäße Programm enthält und z.B. als magnetisches, elektrisches, elektro-magnetisches, optisches und/oder andersartiges Speichermedium ausgebildet ist. Das Speichermedium kann insbesondere ein physikalisches und/oder dingliches Speichermedium sein. Das Speichermedium ist beispielsweise tragbar oder in einer Vorrichtung fest installiert. Das Speichermedium ist beispielsweise gegenständlich ausgebildet. "Computerlesbar" soll insbesondere so verstanden werden, dass das Speichermedium von einem Computer bzw. einer Datenverarbeitungsvorrichtung (aus)gelesen und/oder beschrieben werden kann, beispielsweise von einem Prozessor. Das Speichermedium ist beispielsweise ein Programmspeicher eines Prozessors.

Das Suchgebiet wird aus dem Kartenausschnitt bestimmt, der zum Zeitpunkt der Eingabe des Suchkriteriums durch den Benutzer angezeigt wird. Zum Beispiel wird das Suchgebiet derart bestimmt, dass es zumindest einem Teil des angezeigten Kartenausschnitts entspricht. Zum Beispiel entspricht das Suchgebiet einem geographisch begrenzten Gebiet im Zentrum des angezeigten Kartenausschnitts.

Zum Beispiel kann der Kartenausschnitt standardmäßig für den Benutzer vorgegeben sein und beispielsweise in den Benutzerdaten gespeichert sein.

Zum Beispiel kann das Suchgebiet nach der Eingabe des Suchkriteriums durch den Benutzer bestimmt werden, zum Beispiel aus dem zu diesem Zeitpunkt angezeigten bzw. zur Anzeige bereitgestellten Kartenausschnitt, zum Beispiel wenn der Benutzer den angezeigten Kartenausschnitt ausgewählt und/oder verändert hat.

Unter einem Kartenausschnitt soll insbesondere eine grafische Darstellung eines Teils der Erdoberfläche verstanden werden, vorzugsweise eine maßstabsgetreue Darstellung. Ein Kartenausschnitt beinhaltet beispielsweise zumindest eine lagerichtige Darstellung eines Teils der auf dem Teil der Erdoberfläche befindlichen geographischen Objekte, wie Straßen, Bahnlinien, größere Gebäude, die Umrisse von Ortschaften und/oder andere technische Sachverhalte wie (politische) Grenzen, Wasser- oder Stromleitungen. Beispiele für Kartenausschnitte sind Straßenkarten, nautische Karten und topographische Karten.

Das Interesse eines Benutzers, der eine Suchanfrage stellt, wenn ihm ein bestimmter Kartenausschnitt angezeigt wird, betrifft zumindest mit einer hohen Wahrscheinlichkeit Informationen betreffend Logistikdatensätze, deren zugeordnete oder zuordenbare Position in dem Kartenausschnitt liegt. Zum Beispiel wird ein Benutzer, der an Informationen betreffend alle Sendungen in einem bestimmten Gebiet interessiert ist, einen dem Gebiet entsprechenden Kartenausschnitt (z.B. unterbewusst oder bewusst) zur Anzeige wählen und eine entsprechende Suchanfrage beispielsweise durch die Eingabe eines entsprechenden Suchkriteriums (z.B. nur Sendungen) starten. Dabei wird der Suchanfrage automatisch ein dem angezeigten Kartenausschnitt entsprechendes Suchgebiet zugeordnet, so dass (zumindest zunächst) nur Logistikdatensätze ausgewählt werden, die Sendungen zugeordnet sind, deren zugeordnete oder zuordenbare Positionen (z.B. deren gesuchte Position und/oder deren jeweils letzte bekannte Position) in dem von dem Kartenausschnitt repräsentierten geographischen Gebiet liegen. Dies ist unter anderem vorteilhaft, um die Suchanfrage geo-semantisch mit einem Suchgebiet zu verknüpfen, das zumindest mit einer hohen Wahrscheinlichkeit im Interesse des Benutzers liegt, und die Anzahl der (zumindest zunächst) zu durchsuchenden Logistikdatensätze somit effektiv zu minimieren.

Im Folgenden werden beispielhafte Ausführungsformen der vorliegenden Erfindung beschrieben, welche auf weitere beispielhafte Merkmale des erfindungsgemäßen Verfahrens, der erfindungsgemäßen Vorrichtung, des erfindungsgemäßen Systems, des erfindungsgemäßen Programms sowie des erfindungsgemäßen Speichermediums abstellen. Insbesondere sollen dabei durch die Beschreibung eines zusätzlichen Verfahrenschritts des erfindungsgemäßen Verfahrens auch als offenbart gelten entsprechende Mittel zur Durchführung des Verfahrenschritts der erfindungsgemäßen Vorrichtung und eine entsprechende Programmanweisung des erfindungsgemäßen Programms. Das Gleiche soll auch für die Offenbarung eines Mittels zur Durchführung eines Verfahrensschritts oder einer Programmanweisung gelten, z.B. soll die Offenbarung eines Mittels zur Durchführung eines Verfahrensschritts auch als Offenbarung des entsprechenden Verfahrensschritts und einer entsprechenden Programmanweisung verstanden werden.

Gemäß einer Ausführungsform umfasst das erfindungsgemäße Verfahren ferner das Anzeigen des Kartenausschnitts für den Benutzer. Zum Beispiel wird dem Benutzer der Kartenausschnitt auf einer Benutzer-Datenverarbeitungsvorrichtung angezeigt. Der Kartenausschnitt kann zum Beispiel auf der Benutzer-Datenverarbeitungsvorrichtung gespeichert sein, zum Beispiel als anzeigbare Grafik. In der Client-Server-Architektur kann der Kartenausschnitt dem Benutzer zum Beispiel auf einem Client angezeigt werden. Zum Beispiel kann dem Client der Kartenausschnitt von einem Server eines Kartendiensteanbieters und/oder des Suchdiensteanbieters zur Anzeige bereitgestellt werden, zum Beispiel als anzeigbare Grafik.

Gemäß einer Ausführungsform des erfindungsgemäßen Verfahrens beinhaltet der Kartenausschnitt eine bekannte Position des Benutzers. Der Kartenausschnitt wird beispielsweise um die bekannte Position des Benutzers zentriert.

Zum Beispiel ist die bekannte Position des Benutzers eine mobile Position, die durch ein Ortungsverfahren bestimmt wird. Beispiele für mögliche Ortungsverfahren sind Internet Protocol (IP-) Ortung, Mobilfunkortung (z.B.Global System for Mobile Communications (GSM-) oder Universal Mobile Telecommunications System (UMTS-) Ortung), Funknetzortung und/oder Satellitenortung (z.B. GPS-Ortung oder Galileo-Ortung). In einer Client-Server-Architektur kann die Ortung beispielsweise clientseitig und/oder serverseitig durchgeführt werden.

Die bekannte Position des Benutzers kann zum Beispiel auch eine ortsfeste Position sein, so dass dem Benutzer standardmäßig immer derselbe Kartenausschnitt angezeigt wird. Die ortsfeste Position kann beispielsweise in einer Benutzerdatenbank des Kartendiensteanbieters und/oder des Suchdiensteanbieters gespeichert sein.

Gemäß einer Ausführungsform des erfindungsgemäßen Verfahrens ist der Kartenausschnitt von dem Benutzer wählbar und/oder veränderbar. Insbesondere kann der Kartenausschnitt vor dem Zuordnen des Suchgebiets zu der Suchanfrage von dem Benutzer wählbar und/oder veränderbar sein. Zum Beispiel kann der Benutzer den Kartenausschnitt verschieben, verkleinem oder vergrößern. Wenn der Kartenausschnitt nach der Eingabe des Suchkriteriums verändert wird, kann das Suchgebiet beispielsweise erneut aus dem veränderten Kartenausschnitt bestimmt werden. Zusätzlich kann dann beispielsweise automatisch eine neue Suchanfrage basierend auf dem eingegebenen Suchkriterium und dem erneut bestimmten Suchgebiet ausgelöst und entsprechend ein oder mehrere Logistikdatensätze ausgewählt werden.

Gemäß einer Ausführungsform des erfindungsgemäßen Verfahrens wird das Suchgebiet automatisch und derart bestimmt, dass das Zentrum des Suchgebiets dem Zentrum des Kartenausschnitts entspricht. Dies ist unter anderem vorteilhaft, um das Suchgebiet um eine Position zu zentrieren, die zumindest mit einer hohen Wahrscheinlichkeit im Interesse des Benutzers liegt. Das Suchgebiet liegt dann also beispielsweise in einem vordefinierten oder dynamisch bestimmten Radius um das Zentrum des Kartenausschnitts herum.

Gemäß einer Ausführungsform des erfindungsgemäßen Verfahrens wird das Suchgebiet automatisch und derart bestimmt, dass das Suchgebiet dem Kartenausschnitt entspricht. Zum Beispiel wird das Suchgebiet automatisch und derart bestimmt, dass das Suchgebiet dem aktuell angezeigten Kartenausschnitt entspricht Das Suchgebiet wird dann beispielweise automatisch aus dem zum Zeitpunkt des Starts der Suchanfrage, beispielsweise bei Eingabe des Suchkriteriums, angezeigten Kartenausschnitt bestimmt. Dies ist unter anderem vorteilhaft, um die Suchanfrage geo-semantisch mit einem Suchgebiet zu verknüpfen, das zumindest mit einer hohen Wahrscheinlichkeit im Interesse des Benutzers liegt.

Gemäß einer Ausführungsform des erfindungsgemäßen Verfahrens werden die Informationen betreffend die Logistikdatensätze auf dem Kartenausschnitt jeweils an der dem jeweiligen Logistikdatensatz zugeordneten oder zuordenbaren Position angezeigt. Dadurch kann zum Beispiel in einer Client-Server-Architektur vermieden werden, dass zur Anzeige der ausgewählten Logistikdatensätze weitere Kartenausschnitte beispielsweise von einem Server eines Kartendiensteanbieters oder des Suchdiensteanbieters zur Anzeige durch den Client bereitgestellt werden müssen. Dies ist unter anderem vorteilhaft, um den notwendigen Datenverkehr zu reduzieren und zum Beispiel den Einsatz von Clients mit einer langsamen Netzwerkverbindung zu ermöglichen: Auch kann das Bereitstellen von (weiteren) Kartenausschnitten von einem Server eines Kartendiensteanbieters oder des Suchdiensteanbieters kostenpflichtig sein.

Zum Beispiel wird ein dem jeweiligen Logistikdatensatz entsprechendes Piktogramm an der dem Logistikdatensatz zugeordneten oder zuordenbaren Position angezeigt. Beispiele fiir mögliche Piktogramme sind ein Lkw-Piktogramm, ein Schiff-Piktogramm, ein Container-Piktogramm, ein Wechselbrücken-Piktogramm, ein Brief-Piktogramm und/oder ein Paket-Piktogramm. Neben einem Piktogramm können beispielsweise weitere von dem Logistikdatensatz umfasste Kenngrößen angezeigt werden und/oder zur Anzeige aktivierbar sein, zum Beispiel durch eine Benutzereingabe. Zum Beispiel wird die Anzeige der Informationen in regelmäßigen Abständen aktualisiert, so dass auch eine Bewegung der den Logistikdatensätzen zugeordneten beweglichen Einheiten darstellbar ist. Die vorhergehenden Positionen können beispielsweise ebenfalls angezeigt werden und/oder zur Anzeige aktivierbar sein, zum Beispiel durch eine Benutzereingabe. Die geplante Route kann beispielsweise ebenfalls angezeigt werden und/oder zur Anzeige aktivierbar sein, zum Beispiel durch eine Benutzereingabe. Dies ist unter anderem vorteilhaft, um eine übersichtliche und benutzerfreundliche Ausgabe der Informationen zu ermöglichen.

Gemäß einer Ausführungsform des erfindungsgemäßen Verfahrens werden auf dem Kartenausschnitt weitere für die ausgewählten Logistikdatensätze jeweils relevante Informationen angezeigt. Zum Beispiel werden Verkehrs-, Wetter-, Flughafen und/oder Seehafeninformationen in der jeweiligen Umgebung der jeweiligen Positionen der Logistikdatensätze angezeigt. Das Auswählen der weiteren Informationen kann beispielsweise in Abhängigkeit des Suchkriteriums, der ausgewählten Logistikdatensätze und/oder des Suchgebiets erfolgen. Zum Beispiel können nur weitere Informationen ausgewählt werden, die einer Position zugeordnet und/oder zuordenbar sind, die in dem Suchgebiet liegt, und die für die ausgewählten Logistikdatensätze relevant sind Das Auswählen und Anzeigen der weiteren Informationen kann beispielsweise automatisch erfolgen. Das Auswählen und Anzeigen der weiteren Informationen kann beispielsweise aufgrund einer Benutzereingabe erfolgen, zum Beispiel kann der Benutzer auswählen, dass relevante Verkehrsinformationen angezeigt werden sollen.

Verkehrsinformationen sind zum Beispiel relevant, wenn zumindest einer der ausgewählten Logistikdatensätze einem LKW zugeordnet ist. Zum Beispiel können in diesem Fall nur Verkehrsinformationen für die geplante Route des LKWs und/oder das Suchgebiet ausgewählt und angezeigt werden. Wetterinformationen sind zum Beispiel insbesondere relevant, wenn zumindest einer der ausgewählten Logistikdatensätze einem Schiff zugeordnet ist. Zum Beispiel können in diesem Fall nur Wetterinformationen für die geplante Route des Schiffs und/oder das Suchgebiet ausgewählt und angezeigt werden Des Weiteren können in diesem Fall beispielsweise Seehafeninformationen, (z.B. Umschlagdauer, freie Liegeplätze u.ä.) für den geplanten Zielhafen des Schiffs ausgewählt und angezeigt werden. Dadurch werden dem Benutzer nur weitere Informationen angezeigt, die für ihn zumindest mit einer hohen Wahrscheinlichkeit von Interesse sind. Dies ist unter anderem vorteilhaft, um den notwendigen Datenverkehr zu reduzieren und zum Beispiel in einer Client-ServerArchitektur den Einsatz von Clients mit einer langsamen Netzwerkverbindung zu ermöglichen. Auch kann das Bereitstellen von weiteren Informationen kostenpflichtig, zeitintensiv und/oder rechenintensiv sein.

Gemäß einer Ausführungsform umfasst das erfindungsgemäße Verfahren ferner das Auswählen von einem oder mehreren weiteren Lögistikdatensätzen aus den Datenquellen in Abhängigkeit zumindest des Suchkriteriums und des Suchgebiets, wobei jedem der weiteren Logistikdatensätze eine mobile Position zugeordnet oder zuordenbar ist, und wobei die weiteren Logistikdatensätze nur dann ausgewählt werden, wenn das Suchkriterium auf sie zutrifft und ihre zugeordnete oder zuordenbare Position nicht in dem Suchgebiet liegt. Zum Beispiel werden alle weiteren Logistikdatensätze ausgewählt, auf die das Suchkriterium zutrifft und deren zugeordnete oder zuordenbare Position nicht in dem Suchgebiet liegt. Das Auswählen der weiteren Logistikdatensätze, deren zugeordnete oder zuordenbare Position nicht in dem Suchgebiet liegt, kann zum Beispiel zeitlich nach dem Auswählen der Logistikdatensätze, deren zugeordnete oder zuordenbare Position in dem Suchgebiet liegt, erfolgen. Zum Beispiel könnte das Auswählen der weiteren (außerhalb des Suchgebiets liegenden) Logistikdatensätze ummittelbar gestartet werden, sobald die Logistikdatensätze, deren jeweils zugeordnete oder zuordenbare Position innerhalb des Suchgebiets liegt, ausgewählt sind. Es ist auch denkbar, dass das Auswählen der weiteren Logistikdatensätze beispielsweise gleichzeitig, aber mit einer geringeren Priorität und/oder im Hintergrund ausgeführt wird. Dadurch könnten als Ergebnis der Suchanfrage, wie oben ausgeführt, in der aufgrund des verkleinerten Suchraums reduzierten Rechenzeit zum Beispiel zunächst die Informationen ausgegeben werden, die auf dem angezeigten Kartenausschnitt anzeigbar sind. Nach einer längeren Rechenzeit könnten dann als Ergebnis der Suchanfrage die weiteren Informationen ausgegeben werden, die nicht auf dem angezeigten Kartenausschnitt anzeigbar sind.

Gemäß einer Ausführungsform umfasst das erfindungsgemäße Verfahren ferner das Ausgeben von Informationen betreffend die weiteren Logistikdatensätze. Zum Beispiel werden die Informationen betreffend die weiteren Logistikdatensätze in einer Darstellung angezeigt, die von der Darstellung für die Informationen betreffend die Logistikdatensätze abweicht. Zum Beispiel werden die Informationen betreffend die weiteren Logistikdatensätze am Rand des angezeigten Kartenausschnitts (beispielsweise innerhalb oder außerhalb des Kartenausschnitts) angezeigt, beispielsweise mit einer Angabe der Entfernung der dem jeweiligen weiteren Logistikdatensatz zugeordneten oder zuordenbaren Position zum Rand oder zum Zentrum des Kartenausschnitts. Zum Beispiel werden die Informationen betreffend die weiteren Logistikdatensätze als Verknüpfung (beispielsweise als Hyperlink) angezeigt. Bei Auswahl der Verknüpfung, beispielsweise durch eine Benutzereingabe, kann dann beispielsweise ein Kartenausschnitt angezeigt werden, der die dem weiteren Logistikdatensatz zugeordnete oder zuordenbare Position enthält (beispielsweise um diese zentriert ist). Dies ist unter anderem vorteilhaft, um dem Benutzer einen Überblick über die nicht auf dem Kartenausschnitt anzeigbaren Informationen zu bieten.

Gemäß einer Ausführungsform umfässt das erfindungsgemäße Verfahren ferner das automatische Erweitern des Suchgebiets für die Suchanfrage, wenn kein Logistikdatensatz ausgewählt wurde oder die Anzahl der ausgewählten Logistikdatensätze einen Schwellwert unterschreitet, und/oder das automatische Verkleinern des Suchgebiets für die Suchanfrage, wenn die Anzahl der ausgewählten Logistikdatensätze einen Schwellwert überschreitet. Beispiele für einen Schwellwert sind beispielsweise 10, 100 und 1000. Insbesondere ist der Schwellwert veränderlich, zum Beispiel verändert sich der Schwellwert abhängig vom Maßstab eines angezeigten Kartenausschnitts (z.B. proportional). Dies ist unter anderem vorteilhaft, um die Anzahl der (zumindest zunächst) zu durchsuchenden Logistikdatensätze effektiv zu minimieren und die Rechenzeit für die Abarbeitung der Suchanfrage zu reduzieren. Außerdem kann dadurch auch eine Priorisierung in der Suche ermöglicht werden, was beispielsweise bei evolutionären Suchanfragen ausgenutzt werden kann (beispielsweise bei der dabei durchgeführten Selektion).

Gemäß einer Ausführungsform des erfindungsgemäßen Verfahrens beschränkt das Suchkriterium die auswählbaren Logistikdatensätze zumindest auf dem Benutzer zugeordnete Logistikdatensätze. Zum Beispiel wird das Suchkriterium automatisch derart bestimmt, dass nur Logistikdatensätze auswählbar sind, für deren Einsicht der Benutzer autorisiert ist, zum Beispiel sind nur Logistikdatensätze auswählbar, die Sendungen, für die das Logistikuntemehmen des Benutzers verantwortlich ist, und/oder Transporteinheiten dieses Logistikunternehmens zugeordnet sind. Dies ist unter anderem in einer Client-Server-Architektur vorteilhaft, in der der oder die Server das erfindungsgemäße Verfahren für mehrere Benutzer, beispielsweise Disponenten unterschiedlicher Logistikuntemehmen, bereitstellen, um sicherzustellen, dass jeder Benutzer jeweils nur auf die eigenen Logistikdatensätze zu greifen kann.

Gemäß einer Ausführungsform des erfindungsgemäßen Verfahrens umfasst das Suchkriterium eine von dem Benutzer eingegebene Zeichenfolge oder besteht aus dieser. Zum Beispiel kann die Zeichenfolge einen Platzhalter (beispielsweise eine Wildcard) zur Trunkierung umfassen, aber auch nicht alleinstehend. Der Platzhalter kann beispielsweise für ein oder mehrere bestimmte oder beliebige Zeichen stehen. Es können beispielsweise auch mehr als ein Platzhalter in der Zeichenfolge enthalten sein. Durch die Trunkierung wird der Suchraum vergrößert. Dies ist unter anderem vorteilhaft, um als Ergebnis einer Suchanfrage Informationen betreffend alle Logistikdatensätzen mit der trunkierten Zeichenfolge auszugeben. Das Auswählen der Logistikdatensätze kann dann zum Beispiel durch einen Vergleich der Zeichenfolge mit den von den Logistikdatensätzen jeweils umfassten Kenngrößen und einen Abgleich des Suchgebiets mit der den Logistikdatensätzen zugeordneten oder zuordenbaren mobilen Position erfolgen.

Gemäß einer Ausführungsform des erfindungsgemäßen Verfahrens umfasst die Zeichenfolge zumindest einen Teil einer Kennung einer oder mehrerer Sendungen und/oder Transporteinheiten und/oder Logistikunternehmen. Beispiele für eine Kennung sind eine Sendungsnummer einer Sendung, eine Inventamummer einer Transporteinheit, eine Fahrgestellnummer, eine Zulassungsnummer und ähnliches. Dies ist unter anderem vorteilhaft, um als Ergebnis einer Suchanfrage Informationen betreffend alle Logistikdatensätzen, die einer Sendung und/oder Transporteinheit mit zumindest dem Teil der Kennung zugeordnet sind, auszugeben. Das Auswählen der Logistikdatensätze kann dann zum Beispiel durch einen Vergleich der Zeichenfolge mit den von den Logistikdatensätzen jeweils umfassten Kennungen der dem jeweiligen Logistikdatensatz zugeordneten Sendungen und/oder Transporteinheiten und einen Abgleich des Suchgebiets mit der den Logistikdatensätzen zugeordneten oder zuordenbaren mobilen Position erfolgen.

Gemäß einer Ausführungsform des erfindungsgemäßen Verfahrens umfasst das Suchkriterium einen Sendungstyp, einen Transporteinheitstyp, eine Identifikation eines Spediteurs und/oder ein zeitbezogenes Kriterium. Beispiele für mögliche Sendungstypen sind Sicherheitssendung, Schiffiracht, Flugzeugfracht, Einschreiben, und temperatursensitive Sendung. Beispiele für mögliche Transporteinheitstypen sind LKW, PKW, Schiff, Flugzeug, Transporter, Zug, Zugwaggon, Container und Wechselbrücke. Beispiele für mögliche zeitbezogene Kriterien sind die Zeit seit der Abfahrt, die Zeit bis zur (geplanten oder wahrscheinlichen) Ankunft und die bereits erfolgte (bekannte) Verzögerung. Das Auswählen der Logistikdatensätze kann dann zum Beispiel durch einen Vergleich des Suchkriteriums mit von den Logistikdatensätzen jeweils umfassten Kenngrößen der dem jeweiligen Logistikdatensatz zugeordneten Sendungen und/oder Transporteinheiten und einen Abgleich des Suchgebiets mit der den Logistikdatensätzen zugeordneten oder zuordnenbaren mobilen Position erfolgen.

Selbstverständlich ist auch eine Verknüpfung verschiedener Suchkriterien und/oder Zeichenfolgen als Suchanfrage eines Benutzers denkbar.

Gemäß einer Ausführungsform des erfindungsgemäßen Verfahrens umfassen die ausgewählten Logistikdatensätze einen oder mehrere Sendungsverfolgungsdatensätze oder sind diesen zugeordnet oder zuordenbar, wobei jeder der Sendungsverfolgungsdatensätze die letzte bekannte Position einer Sendung umfasst. Wie oben ausgeführt, kann die mobile Position einer Sendung beispielsweisein regelmäßigen oder in unregelmäßigen Zeitabständen in einer Datenbank aktualisiert werden. Die aktuelle Position der Sendung ist beispielsweise die zuletzt aktualisierte Position. Die letzte bekannte Position einer Sendung ist beispielsweise die letzte Scanposition, die die Sendung passiert hat. Des Weiteren kann jeder der Sendungsverfolgungsdatensälze beispielsweise die Kennung der zugeordneten Sendung und/oder den Sendungstyp umfassen. Die Sendungsverfolgungsdatensätze sind beispielsweise in einer Sendungsverfolgungsdatenbank gespeichert.

Gemäß einer Ausführungsform des erfindungsgemäßen Verfahrens ist die letzte bekannte Position einer Sendung die letzte bekannte Position einer Transporteinheit, die die Sendung transportiert. Zum Beispiel ist der Sendungsverfolgungsdatensatz der Sendung mit dem Telematikdatensatz der Transporteinheit derart verknüpft, dass die dem Telematikdatensatz der Transporteinheit zugeordnete oder zuordenbare Position auch dem Sendungsverfolgungsdatensatz zugeordnet oder zuordenbar ist. Die Verknüpfung des Sendungsverfolgungsdatensatzes mit dem Telematikdatensatz kann beispielsweise manuell oder automatisch erfolgen. Zum Beispiel kann der Sendungsverfolgungsdatensatz einer Sendung mit dem Telematikdatensatz einer Transporteinheit verknüpft werden, wenn die Sendung an der Verladerampe der Transporteinheit gescannt wird Dies ist unter anderem vorteilhaft, um Sendungen verfolgen zu können, die keine eigenen Positionssender aufweisen.

Gemäß einer Ausführungsform des erfindungsgemäßen Verfahrens umfassen die ausgewählten Logistikdatensätze einen oder mehrere Telematikdatensätze oder sind diesen zugeordnet oder zuordenbar, wobei jeder der Telematikdatensätze die letzte bekannte Position einer beweglichen Transporteinheit umfasst. Des Weiteren kann jeder der Telematikdatensätze beispielsweise die Kennung der zugeordneten Transporteinheit und/oder den Transporteinheitstyp umfassen. Die Telematikdatensätze sind beispielsweise in einer oder mehreren Telematikdatenbanken gespeichert. Zum Beispiel sind die Telematikdatensätze in Telematikdatenbanken unterschiedlicher Anbieter gespeichert. Zum Beispiel sind die Telematikdatensätze in Telematikdatenbanken unterschiedlicher Transporteinheitenhersteller gespeichert. Zum Beispiel sind die Telematikdatensätze in einer Fuhrparkdatenbank des Logistikunternehmens des Benutzers gespeichert.

Gemäß einer Ausführungsform des erfindungsgemäßen Verfahrens ist die letzte bekannte Position einer beweglichen Transporteinheit die aktuelle Position der Transporteinheit. Wie oben ausgeführt, kann die mobile Position einer beweglichen Transporteinheit beispielsweise in regelmäßigen oder in unregelmäßigen Zeitabständen in einer Datenbank aktualisiert werden. Die aktuelle Position der Transporteinheit ist beispielsweise die zuletzt aktualisierte Position.

Gemäß einer Ausführungsform des erfindungsgemäßen Verfahrens umfassen die Datenquellen eine oder mehrere (fahrzeugeigene) Positionssender, Positionsdatenbanken, Telematikdatenbanken, Fuhrparkdatenbanken, ortsfeste oder mobile Sendungskontrollstationen, Sendungsverfolgungsdatenbanken und/oder Logistikdatenbanken .

Gemäß einer Ausführungsform umfasst das erfindungsgemäße System eine oder mehrere Datenquellen und/oder eine oder mehrere Datenschnittstellen zum Zugriff auf die Datenquellen.

Gemäß einer Ausführungsform umfasst die erfindungsgemäße Vorrichtung eine Netzwerkschnittstelle zur Verbindung mit einem Netzwerk. Eine Netzwerkschnittstelle ist beispielsweise eine kabelgebundene Netzwerkschnittstelle, wie eine Ethemet-Netzwerkschnittstette oder ein DSL-Modem, oder eine kabellose Netzwerkschnittstelle, wie eine UMTS-Netzwerkschnittstelle oder eine IEEE 802.11-Netzwekschnittstelle. Das Netzwerk ist beispielsweise ein lokales Netzwerk, ein Weitverkehrsnetzwerk, ein virtuelles Netzwerk, ein Funknetzwerk, eine Telefonnetzwerk und/oder das Internet.

Das beispielhafte erfindungsgemäße Verfahren, die beispielhafte erfindungsgemäße Vorrichtung, das beispielhafte erfindungsgemäße System und das beispielhafte erfindungsgemäße Programm sowie deren Ausführungsformen ermöglichen also u.a. eine geo-semantische Suche in geobasierten Logistikdatensätzen (und/oder allgemeinen geobasierten Informationen). Da ein Benutzer zum Teil bereits vor der Suchanfrage spezifische geobasierte Informationen hat, welche das Suchgebiet eingrenzen, ist es sowohl für die Performance als auch für die Benutzerfreundlichkeit einer Suche vorteilhaft, diese spezifischen Informationen des Benutzers automatisch zu nutzen. Dies wird beispielsweise durch das automatische Zuordnen eines Suchgebiets (und/oder allgemeiner geographischer Informationen) zu einer Suchanfrage erreicht.

Die Merkmale des beschriebenen beispielhaften erfindungsgemäßen Verfahrens und dessen Ausführungsformen sollen auch in allen möglichen Kombinationen miteinander als offenbart verstanden werden. Die zu dem beispielhaften erfindungsgemäßen Verfahren und ihren Ausführungsformen beschriebenen Merkmale sollen auch (wiederum in allen möglichen Kombinationen) entsprechend für die beispielhafte erfindungsgemäße Vorrichtung, das beispielhafte erfindungsgemäße System und das beispielhafte erfindungsgemäße Programm als offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Zeichnungen

In den Figuren zeigen:
- Fig. 1:: ein Blockdiagramm einer beispielhaften Ausführungsform eines erfindungsgemäßen Systems;
- Fig. 2a und 2b:: ein Blockdiagramm einer beispielhaften Ausführungsform eines Servers und eines Clients;
- Fig. 3a bis 3f:: schematische Darstellungen eines auf einer Anzeigeeinheit des Client angezeigten Kartenausschnitts;
- Fig. 4a bis 4d:: Ablaufdiagramme mit Verfahrensschritten beispielhafter Ausführungsformen des erfindungsgemäßen Verfahrens; und
- Fig. 5:: ein Blockdiagramm einer beispielhaften Ausführungsform eines Speichermediums.

### Detaillierte Beschreibung einiger beispielhafter Ausführungsformen der Erfindung

Die vorliegende Erfindung wird im Folgenden anhand von beispielhaften Ausführungsformen beschrieben.

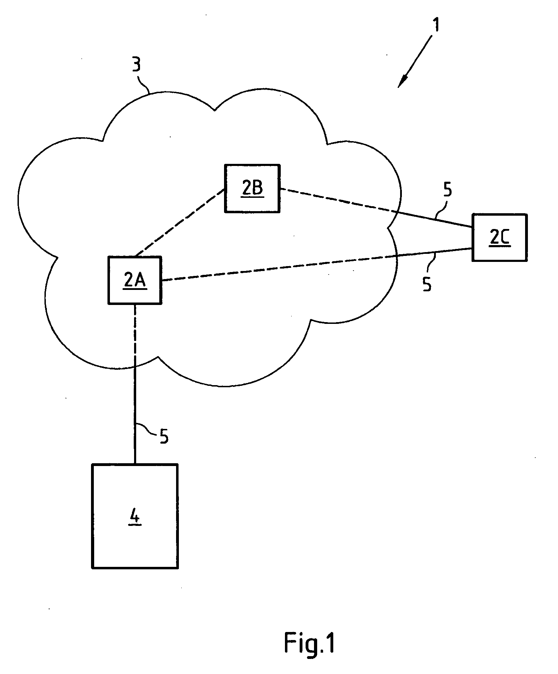

Fig. 1 zeigt ein Blockdiagramm einer beispielhaften Ausführungsform eines erfindungsgemäßen Systems 1. System 1 umfasst unter anderem Server 2A, 2B und 2C.

Server 2A ist ein Anwendungsserver eines Suchdiensteanbieters und stellt einen Süchdienst für einen oder mehrere Benutzer bereit. Server 2B ist ein Datenbankserver des Suchdienstanbieters und stellt eine Sendungsverfolgungsdatenbank mit Sendungsverfolgungsdatensätzen für die Benutzer des Suchdienstes bereit. Server 2A und 2B sind Teil einer Rechnerwolke 3. Rechnerwolke 3 kann neben Server 2A und 2B weitere Server beispielsweise zum Bereitstellen des Suchdienstes und/oder weiterer Dienste umfassen.

Server 2C ist ein Datenbankserver eines vom Suchdiensteanbieters verschiedenen Telematikdiensteanbieters und stellt eine Telematikdatenbank mit Telematikdatensätzen für einen oder mehrere Benutzer bereit.

Client 4 gehört einem Benutzer des Suchdienstes und des Telematikdienstes und ist über ein Netzwerk 5 zumindest mit Server 2A und/oder Rechnerwolke 3 verbunden. Client 3 ist vorzugsweise ein Personalcomputer, ein tragbarer Computer oder ein Thin-Client.

Server 2C ist ebenfalls über das Netzwerk 5 zumindest mit Server 2A und/oder Rechnerwolke 3 verbunden. Das Netzwerk 5 ist vorzugsweise das Internet.

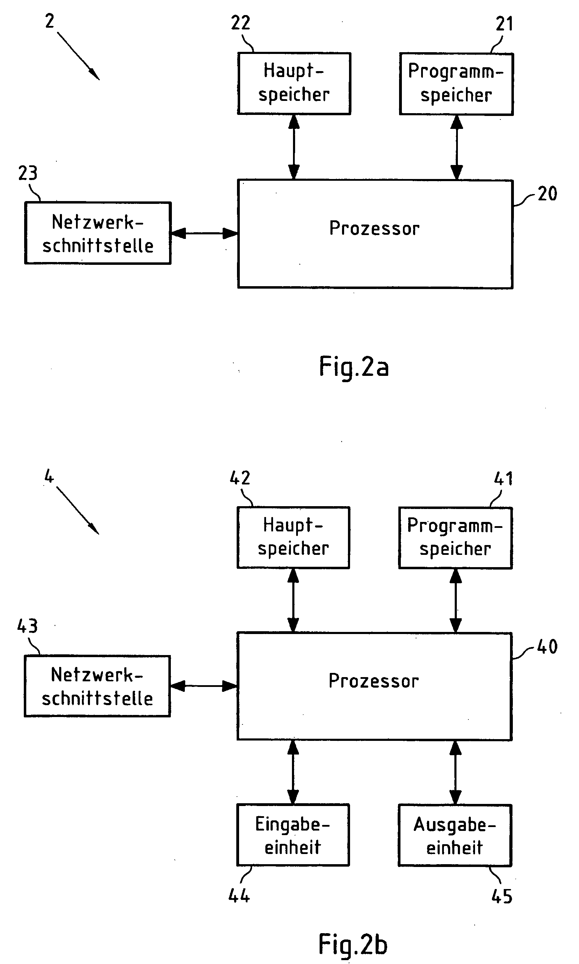

Fig. 2a zeigt ein Blockdiagramm einer beispielhaften Ausführungsform des Servers 2A. Server 2A ist eine beispielhafte Ausführungsform einer erfindungsgemäßen Vorrichtung.

Prozessor 20 von Server 2A führt Programmanweisungen aus, die in Programmspeicher 21 gespeichert sind; und speichert beispielsweise Zwischenergebnisse oder ähnliches in Hauptspeicher 22. Außerdem steuert Prozessor 20 Netzwerkschnittstelle 23, über welche sich Server 2A mit dem Netzwerk 5 verbinden kann.

Des Weiteren kann Server 2A über weitere Einheiten verfügen, wie beispielsweise eine Ein- und/oder Ausgabeeinheit, z.B. eine Tastatur, eine Maus, eine Anzeigeeinheit (z.B. ein LCD-Display und/oder LED Leuchtanzeigen), ein Mikrofon, eine berührungsempfindliche Anzeigeeinheit, einen Lautsprecher, einen biometrischen Sensor (z.B. ein Fingerabdruck-Sensor) und/oder eine Kamera.

Das Blockdiagramm einer beispielhaften Ausführungsform des Servers 2B und/oder des Servers 2C kann dem Blockdiagramm der beispielhaften Ausführungsform des Servers 2A entsprechen. Die Server 2B und 2C sind insbesondere eingerichtet, um eine große Anzahl von Logistikdatensätzen speichern und verwalten zu können. Dazu weisen die Server 2B und 2C beispielsweise einen umfangreichen Speicher auf.

Fig. 2b zeigt ein Blockdiagramm einer beispielhaften Ausführungsform des Clients 4.

Prozessor 40 von Client 4 führt Programmanweisungen aus, die in Programmspeicher 41 gespeichert sind, und speichert beispielsweise Zwischenergebnisse oder ähnliches in Hauptspeicher 42. Außerdem steuert Prozessor 40 Netzwerkschnittstelle 43, über welche sich Client 4 mit dem Netzwerk 5 (siehe Fig. 1) verbinden kann.

Client 4 umfasst ferner eine Eingabeeinheit 44 und eine Anzeigeeinheit 45. Eingabeeinheit 44 kann beispielsweise Benutzereingaben aufnehmen und an Prozessor 40 weiterleiten. Anzeigeeinheit 45 kann Informationen für den Benutzer von Prozessor 40 empfangen und ausgeben. Eingabeeinheit 44 ist vorzugsweise eine Maus und/oder Tastatur, und Anzeigeeinheit 45 ist vorzugsweise ein Monitor.

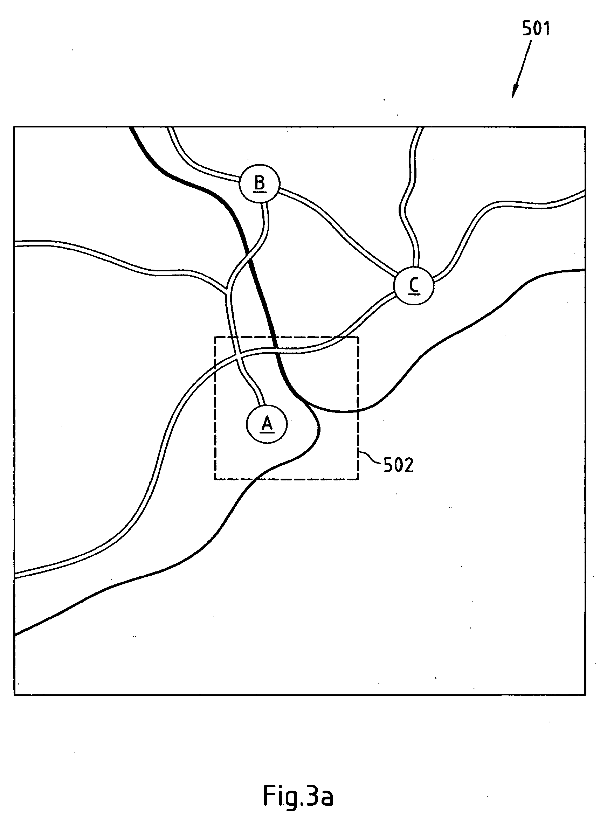

Fig. 3a bis 3f zeigen schematische Darstellungen eines auf der Anzeigeeinheit 45 des Clients 4 angezeigten Kartenausschnitts. Die Kartenausschnitte werden dem Client 4 zum Beispiel von einem Server des Suchdiensteanbieters als anzeigbare Grafik bereitgestellt, zum Beispiel von Server 2A.

In Fig. 3a ist ein Kartenausschnitt 501 dargestellt. In dem Kartenausschnitt 501 ist die Lage der Orte A, B und C und deren Umgebung dargestellt. In der Umgebung der Orte A, B und C stellt der Kartenausschnitt 501 unter anderem Straßen, einen Fluss und ein Meer dar.

Der Kartenausschnitt 501 wird einem Benutzer des Clients 4 zum Beispiel standardmäßig angezeigt, wenn sich der Benutzer am Server 2A des Suchdiensteanbieters anmeldet. Zum Beispiel ist der Benutzer als Disponent eines Logistikunternehmens für Sendungen und/oder Transporteinheiten in dem vom Kartenausschnitt 501 dargestellten Teils der Erdoberfläche verantwortlich. Zum Beispiel ist der Kartenausschnitt 501 (oder eine diesen identifizierende Information) als Standardkartenausschnitt in den Benutzerdaten des Benutzers in einer Benutzerdatenbank des Suchdiensteanbieters gespeichert.

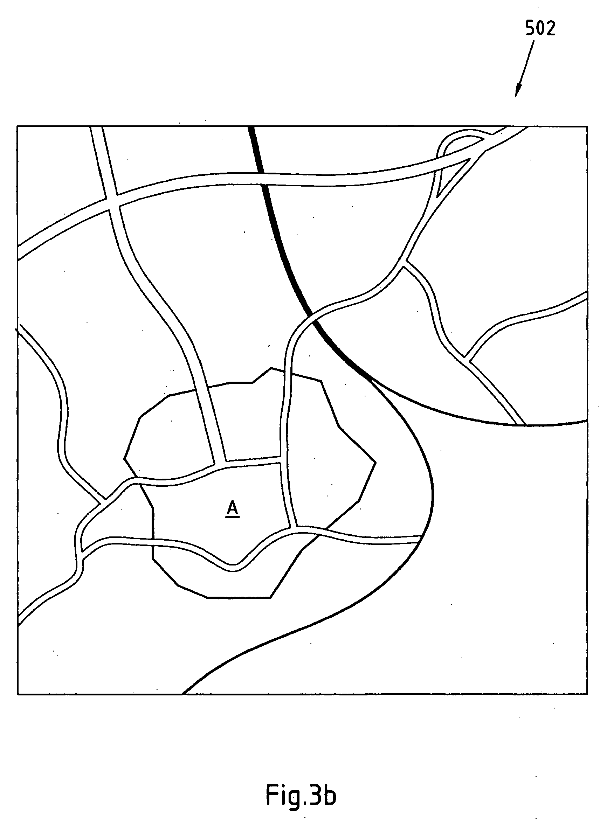

In Fig. 3b ist ein Kartenausschnitt 502 dargestellt. Kartenausschnitt 502 hat einen größeren Maßstab als der Kartenausschnitt 501 und stellt die Umgebung des Orts A dar. In Kartenausschnitt 502 sind mehr Details als in Kartenausschnitt 501 dargestellt. Zum Beispiel ist der Umriss des Orts A erkennbar und es sind mehr Straßen als in Kartenausschnitt 501 dargestellt.

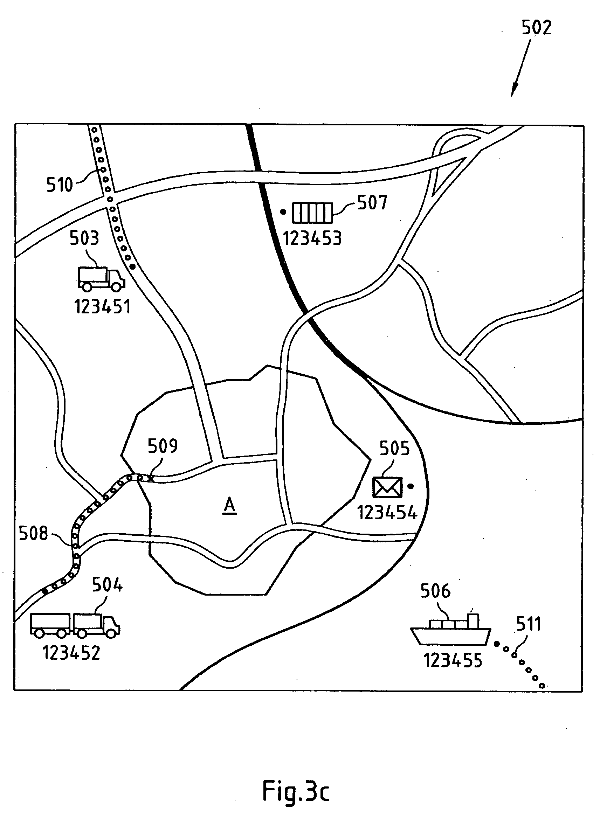

In Fig. 3c sind auf dem Kartenausschnitt 502 Piktogramme 503 bis 507 dargestellt, die beweglichen Einheiten, wie Sendungen und Transporteinheiten, zugeordnet sind. Die Piktogramme 503 bis 507 sind jeweils lagerichtig entsprechend der aktuellen Position der zugeordneten beweglichen Einheit auf Kartenausschnitt 502 angeordnet und enthalten beispielsweise Informationen betreffend die Einheit, wie die Kennung und den Typ. Der Typ der Einheit kann beispielsweise aus der grafischen Darstellung des Piktogramms entnommen werden. Zum Beispiel ist das Piktogramm 503 dem LKW mit der Fahrgestellnummer 123451, das Piktogramm 504 dem LKW mit Anhänger mit der Fahrgestellnummer 123452, das Piktogramm 505 dem Brief mit der Sendungsnummer 123454, das Piktogramm 506 dem Containerschiff mit der Kennung 123455 und das Piktogramm 507 dem Container mit der Inventarnummer 123453 zugeordnet.

Für den LKW mit Anhänger mit der Fahrgestellnummer 123452 sind auf dem Kartenausschnitt 502 in Fig. 3c neben dem Piktogramm 503 außerdem die geplante Route 508 und der Zielpunkt 509 dargestellt. Für den LKW mit der Fahrgestellnummer 123451 ist auf dem Kartenausschnitt 502 in Fig. 3c außerdem die geplante Route 510 und für das Containerschiff mit der Kennung 123455 die geplante Route 511 dargestellt.

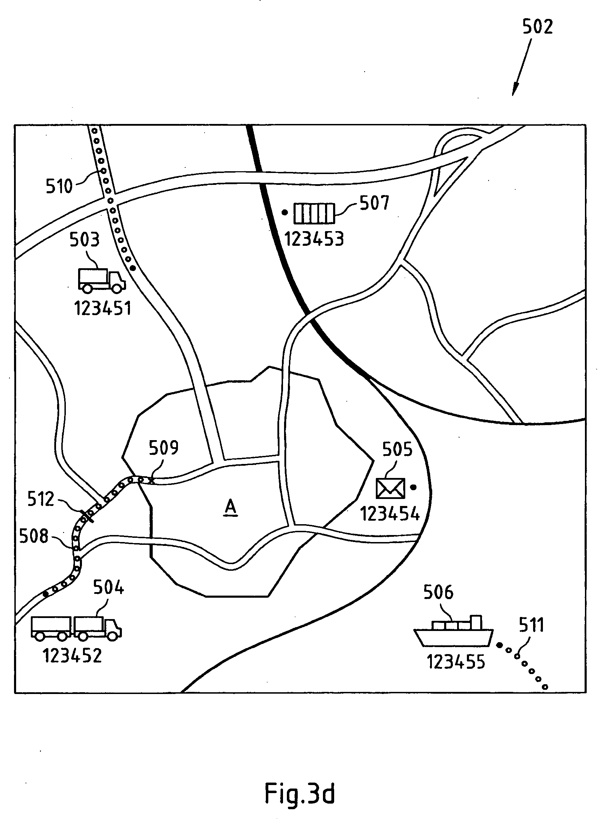

In Fig. 3d ist auf dem Kartenausschnitt 502 neben den in Fig. 3c dargestellten Piktogramme z03 bis 507 ein Piktogramm 512 angeordnet. Das Piktogramm 512 ist einer Straßensperrung entlang der geplanten Route 508 des LKW mit Anhänger mit der Fahrgestellnununer 123452 zugeordnet.

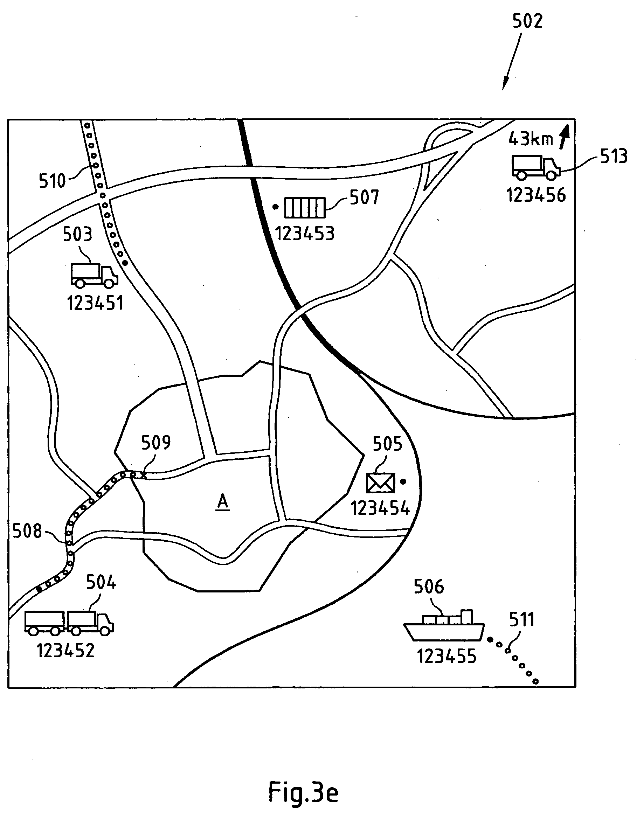

In Fig. 3e ist auf dem Kartenausschnitt 502 neben den in Fig. 3c dargestellten Piktogrammen 503 bis 507 ein Piktogramm 513 angeordnet. Das Piktogramm 513 ist dem LKW mit der Fahrgestellnummer 123456 zugeordnet. Allerdings liegt die aktuelle Position des LKWs mit der Fahrgestellnummer 123456 nicht innerhalb des vom Kartenausschnitt 502 dargestellten Teils der Erdoberfläche, so dass das Piktogramm 513 am Rand des Kartenausschnitts 502 zusammen mit einem Richtungspfeil und einer Entfernungsangabe angeordnet ist. In diesem Fall ist der LKW mit der Fahrgestellnummer 123456 beispielsweise 43km vom Rand des vom Kartenausschnitt 502 dargestellten Teils der Erdoberfläche in der Richtung des Richtungspfeils entfernt.

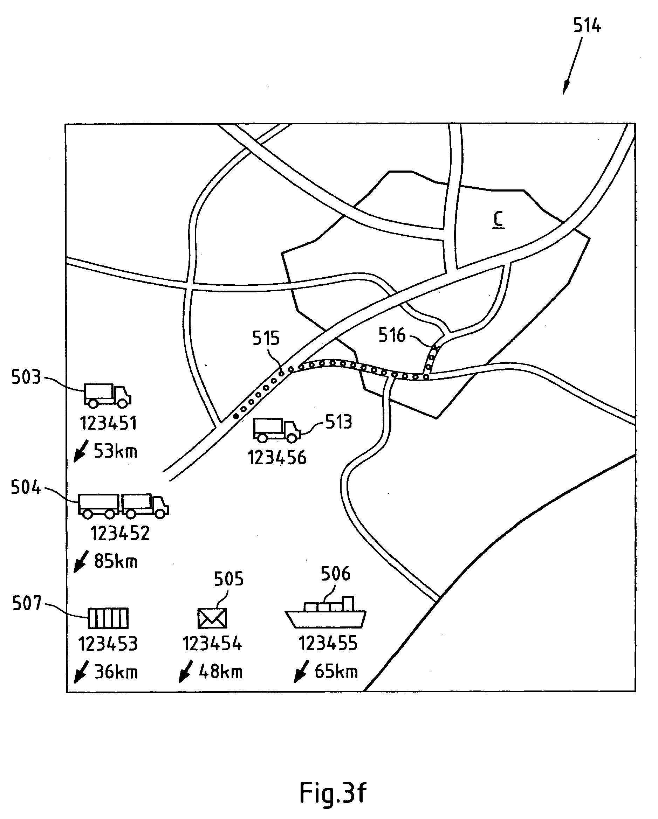

In Fig. 3f ist ein Kartenausschnitt 514 dargestellt. Kartenausschnitt 514 hat beispielsweise denselben Maßstab wie Kartenausschnitt 502 und stellt die Umgebung des Orts C dar. Die aktuelle Position des dem Piktogramm 513 zugeordneten LKWs mit der Fahrgestellnummer 123456 liegt innerhalb des vom Kartenausschnitt 514 dargestellten Teils der Erdoberfläche, so dass das Piktogramm 513 lagerichtig entsprechend der aktuellen Position des LKWs mit der Fahrgestellnummer 123456 auf dem Kartenausschnitt 514 angeordnet ist. Außerdem sind auf Kartenausschnitt 514 die geplante Route 515 und der Zielpunkt 516 des LKWs mit der Fahrgestellnummer 123456 dargestellt.

Allerdings lieg die aktuelle Position der den Piktogramme 503 bis 507 jeweils zugeordneten beweglichen Einheiten nicht innerhalb des vom Kartenausschnitt 514 dargestellten Teils der Erdoberfläche, so dass die Piktogramme 503 bis 507 nun am Rand des Kartenausschnitts 514 zusammen mit einem Richtungspfeil und einer Entfernungsangabe angeordnet sind.

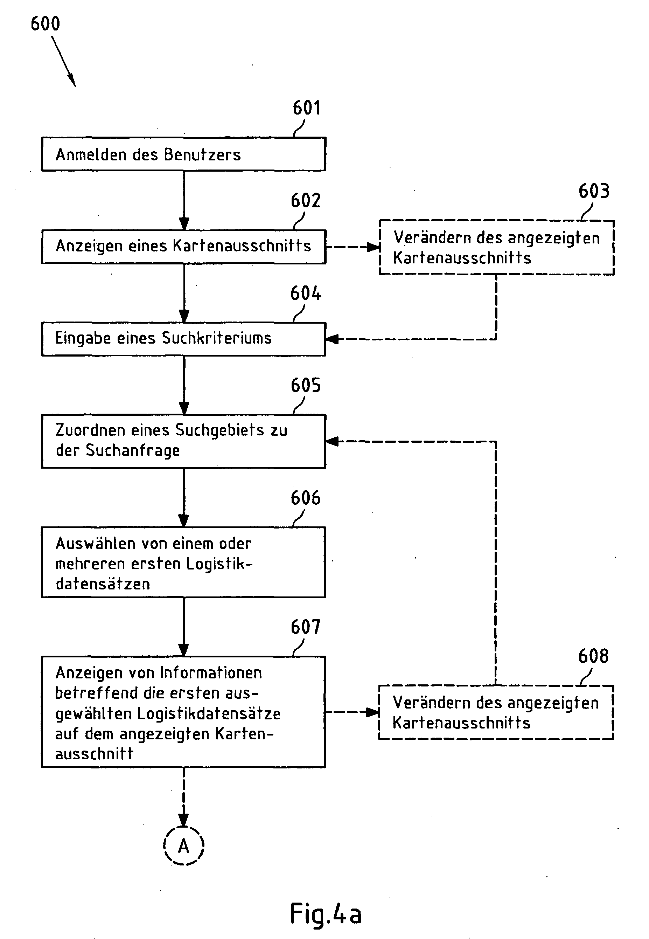

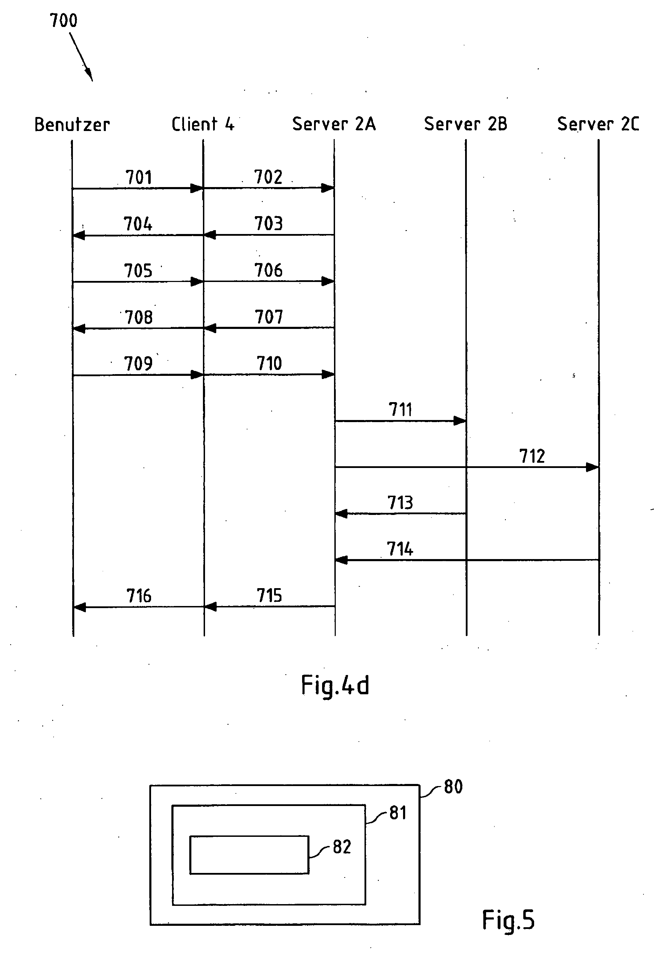

In Fig. 4a bis 4d sind Ablaufdiagramme 600. 610. 620 und 700 mit Verfahrensschritten beispielhafter Ausführungsformen des erfindungsgemäßen Verfahrens dargestellt. Die Schritte in den Ablaufdiagrammen , die von einem Programm ausgeführt werden können, sollen insbesondere derart verstanden werden, dass ein Programm entsprechende Programmanweisungen enthält, die eine Vorrichtung, auf deren Prozessor das Programm ausgeführt wird, dazu veranlassen, einen entsprechenden Schritt auszuführen Der Prozessor kann zur Ausführung eines Schrittes z.B. ein oder mehrere entsprechende Mittel (an)steuern. Die Verfahrensschritte der Ablaufdiagramme können dabei lediglich von einer Vorrichtung ausgeführt werden, oder von mehreren Vorrichtungen (die Verfahrensschritte/Programmanweisungen werden dann also auch von den jeweiligen Prozessoren der Vorrichtungen ausgeführt). Der letztgenannte Fall wird unten anhand des Ablaufdiagramms 700 der Fig. 4d für die Schritte 601-607 des Ablaufdiagramms 600 der Fig. 4a näher beschrieben.

In Fig. 4a ist ein Ablaufdiagramm 600 mit Verfahrensschritten einer beispielhaften Ausfuhrungsform des erfindungsgemäßen Verfahrens dargestellt.

In Schritt 601 meldet sich der Benutzer bei einem Suchdiensteanbieter für Logistikdatensätze an. Dabei gibt der Benutzer beispielsweise seinen Benutzemamen und sein Passwort für den Suchdienstanbieter ein. Eine Benutzereingabe kann beispielsweise über die Eingabeeinheit 44 des Clients 4 erfolgen. Diese Authentisierungsdaten werden vom dem Suchdiensteanbieter authentifiziert, zum Beispiel durch einen Abgleich mit Benutzerdaten in einer Benutzerdatenbank des Suchdienstanbieters. Der Abgleich mit den Benutzerdaten in einer Benutzerdatenbank des Suchdiensteanbieters kann beispielsweise durch den Server 2A des Suchdiensteanbieters erfolgen.

Nach dem Anmelden des Benutzers wird dem Benutzer in Schritt 602 ein Kartenausschnitt angezeigt. Zum Beispiel wird der in Fig. 3a dargestellte Kartenausschnitt 501 angezeigt. Wie oben ausgerührt, wird der Kartenausschnitt 501 dem Benutzer zum Beispiel standardmäßig angezeigt, wenn sich der Benutzer bei dem Suchdiensteanbieters anmeldet. Eine Anzeige eines Kartenausschnitts kann beispielsweise auf der Anzeigeeinheit 45 des Clients 4 erfolgen.

Des Weiteren kann der Benutzer in einem optionalen Schritt 603 den angezeigten Kartenausschnitt durch eine Benutzereingabe verändern, zum Beispiel verkleinern, vergrößern und/oder verschieben. Zum Beispiel kann der Benutzer in dem standardmäßig angezeigten in Fig. 3a dargestellten Kartenausschnitt 501 den vergrößerten in Fig. 3b dargestellten Kartenausschnitt 502 zur Anzeige auswählen. Anschließend wird dem Benutzer der in Fig. 3b dargestellte Kartenausschnitt 502 angezeigt.

In Schritt 604 gibt der Benutzer ein Suchkriterium für eine Suchanfrage ein. Zum Beispiel gibt der Benutzer den trunkierten Suchbegriff "12345*" als Suchkriterium ein. Das "*" in dem trunkierten Suchbegriff ist ein Platzhalterzeichen für beliebig viele weitere Zeichen. Der Suchbegriff "12345*" trifft somit beispielsweise auf die folgenden Zeichenfolgen zu: "123450". "12345ABC" und "123456789".

in Schritt 605 wird der Suchanfrage automatisch ein Suchgebiet zugeordnet. Das Suchgebiet wird aus dem zum Zeitpunkt der Eingabe des Suchkriteriums angezeigten Kartenausschnitt bestimmt. Dies ist zum Beispiel der in Fig. 3b dargestellte Kartenausschnitt 502. Das Zuordnen des Suchgebiets zu der Suchanfrage erfolgt durch eine logische Verknüpfung des vom Benutzer eingegebenen Suchkriteriums mit einer Repräsentation des Suchgebiets. Zum Beispiel wird das Suchkriterium mit einem Intervall der entsprechenden geographischen Breiten- und Längenangaben verknüpft. Die Suchanfrage lautet dann beispielsweise folgendermaßen: "12345* in Last:41.11221 to 41.11110 and Long:56.000 to 56.421". Als Ergebnis der Suchanfrage würden somit zum Beispiel alle Logistikdatensätze ausgewählt, welche beweglichen Einheiten zugeordnet sind, die sich in dem Suchgebiet bewegen oder bewegt haben sowie solche, die mit der Nummer "12345" beginnen.

Des Weiteren wird das vom Benutzer eingegebene Suchkriterium beispielsweise automatisch derart mit dem Benutzer verknüpft, dass das Ergebnis der Suchanfrage auf Logistikdatensätze beschränkt ist, für dessen Einsicht der Benutzer autorisiert ist. Die Suchanfrage lautet dann beispielsweise folgendermaßen: "12345* in Lat:41.11221 to 41.11110 and Long:56.000 to 56.421 where tracking type equals customer account".

In Schritt 606 werden entsprechend der Suchanfrage erste Logistikdatensätze ausgewählt, auf die die das Suchkriterium zutrifft und die einer beweglichen Einheit zugeordnet sind, deren aktuellen Position in dem Suchgebiet liegt. Das Auswählen kann beispielsweise durch die Datenbankserver 2B und 2C erfolgen.

Zum Beispiel werden Telematikdatensätze und Sendungsverfolgungsdatensätze ausgewählt, welche jeweils eine Kennung und die aktuelle Position der dem jeweiligen Datensatz zugeordneten beweglichen Einheit umfassen. Des Weiteren können die ausgewählten Telematikdatensätze beispielsweise jeweils die geplanten Route und den Zielpunkt der zugeordneten Transporteinheit umfassten. Zum Beispiel werden für den oben genannten Suchbegriff erste Telematikdatensätze ausgewählt, die dem LKW mit der Fahrgestellnummer 123451, dem LKW mit Anhänger mit der Fahrgestellnummer 123452 und dem Containerschiff mit der Kennung 123455 zugeordnet sind. Zum Beispiel werden für den oben genannten Suchbegriff außerdem erste Sendungsverfolgungsdatensätze ausgewählt, die dem Brief mit der Sendungsnummer 123454 und dem Container mit der Inventarnummer 123453 zugeordnet sind.

Anschließend können Informationen betreffend die ersten ausgewählten Logistikdatensätze als erstes Ergebnis der Suchanfrage erzeugt werden. Zum Beispiel wird als erstes Ergebnis der oben genannten Suchanfrage aus den ersten ausgewählten Telematikdatensätzen und den ersten ausgewählten Sendungsverfolgungsdatensätzen eine erste zusätzliche Darstellungsebene für den in Fig. 3b dargestellten Kartenausschnitt 502 mit den Piktogrammen 503 bis 507 erzeugt. Des Weiteren kann die erste zusätzliche Darstellungsebene für die ersten ausgewählten Telematikdatensätze beispielsweise die geplanten Routen 508, 510 und 511 und den Zielpunkt 509 enthalten. Die erste zusätzliche Darstellungsebene kann beispielsweise derart über den in Fig. 3b dargestellten Kartenausschnitt 502 gelegt werden, dass sich die in Fig. 3c dargestellte Anzeige ergibt.

In einem Schritt 607 werden die Informationen betreffend die ersten ausgewählten Logistikdatensätze als erstes Ergebnis der Suchanfrage angezeigt. Zum Beispiel wird die in Fig. 3c dargestellte Anzeige auf Anzeigeeinheit 45 des Clients 4 angezeigt.

In einem optionalen Schritt 608 kann der Benutzer den angezeigten Kartenausschnitt durch eine Benutzereingabe verändern, zum Beispiel verkleinern, vergrößern und/oder verschieben. In diesem Fall wird zurück zu Schritt 605 gesprungen und der Suchanfrage, automatisch ein verändertes Suchgebiet zugeordnet. Das veränderte Suchgebiet wird, wie zu Schritt 605 ausgeführt, aus dem veränderten angezeigten Kartenausschnitt bestimmt. Anschließend laufen erneut die Schritte 608 und 607 ab.

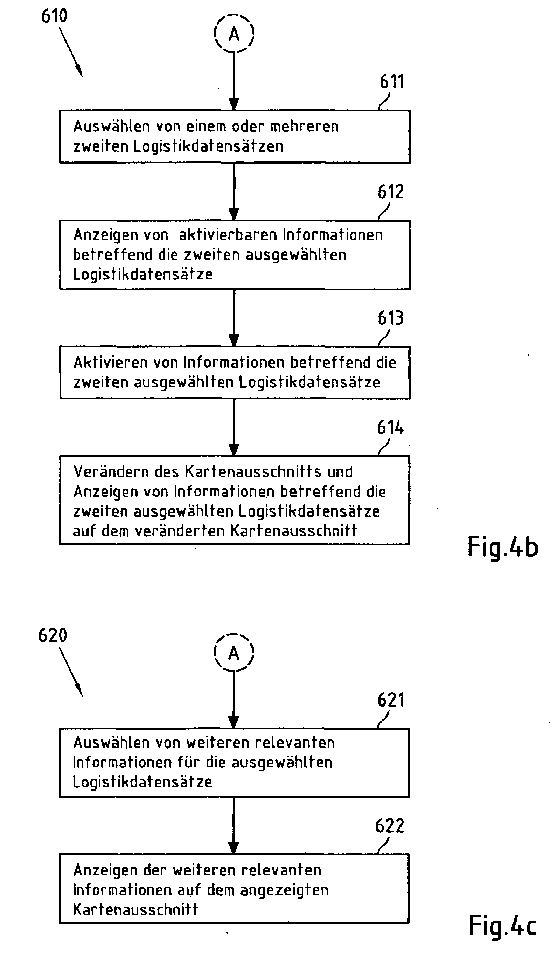

In Fig. 4b ist ein Ablaufdiagramm 610 mit optionalen Verfahrensschritten einer beispielhaften Ausführungsform des erfindungsgemäßen Verfahrens dargestellt. Die in Ablaufdiagramm 610 enthaltenen Schritte 611-614 können beispielsweise zeitlich nach einem der Verfahrensschritte 606 bis 608 des Ablaufdiagramms 600 ablaufen.

In einem optionalen Schritt 611 könnten zweite Logistikdatensätze ausgewählt werden, auf die das Suchkriterium zutrifft und die einer beweglichen Einheit zugeordnet sind, deren aktuellen Position nicht in dem Suchgebiet liegt. Das Auswählen kann beispielsweise durch die Datenbankserver 2B und 2C erfolgen. Zum Beispiel wird für den oben genannten Suchbegriff ein zweiter Telematikdatensatz ausgewählt, der dem LKW mit der Fahrgestellnummer 123456 zugeordnet ist.

Abschließend können Informationen betreffend die zweiten ausgewählten Logistikdatensätze als zweites Ergebnis der Suchanfrage erzeugt werden. Zum Beispiel wird eine zweite zusätzliche Darstellungsebene für den in Fig. 3b dargestellten Kartenausschnitt 502 mit dem Piktogramm 513 als zweites Ergebnis der oben genannten Suchanfrage aus dem zweiten ausgewählten Telematikdatensatz erzeugt. Die zweite zusätzliche Darstellungsebene kann beispielsweise derart über den in Fig. 3c dargestellten Kartenausschnitt 502 gelegt werden, dass sich die in Fig. 3e dargestellte Anzeige ergibt.

In einem optionalen Schritt 612 können die Informationen betreffend die zweiten ausgewählten Logistikdatensätze als aktivierbares zweites Ergebnis der Suchanfrage angezeigt werden. Zum Beispiel wird die in Fig. 3e dargestellte Anzeige auf der Anzeigeeinheit 45 des Clients 4 angezeigt. Das Piktogramm 513 ist beispielsweise durch eine Benutzereingabe derart aktivierbar, dass nach dem Aktivieren ein Kartenausschnitt dargestellt wird, der einen Teil der Erdoberfläche darstellt, innerhalb dessen die aktuelle Position des dem Piktogramm 513 zugeordneten LKWs mit der Fahrgestellnummer 123456 liegt. Zum Beispiel ist das Piktogramm 513 ein Hyperlink.

In einem optionalen Schritt 613 kann der Benutzer Informationen betreffend die zweiten ausgewählten Logistikdatensätze aktivieren. Zum Beispiel kann der Benutzer das Piktogramm 513 aktivieren.

Anschließend wird in einem optionalen Schritt 614 der angezeigte Kartenausschnitt derart verändert, dass die aktivierten Informationen betreffend die zweiten ausgewählten Logistikdatensätze auf dem veränderten Kartenausschnitt anordenbar sind. Die aktivierten Informationen werden auf dem veränderten Kartenausschnitt angezeigt. Zum Beispiel liegt die aktuelle Position des dem Piktogramm 513 zugeordneten LKWs mit der Fahrgestellnummer 123456 innerhalb des vom Kartenausschnitt 514 dargestellten Teils der Erdoberfläche. Wenn der Benutzer in Schritt 613 Piktogramm 513 aktiviert hat, wird ihm somit in Schritt 613 die in Fig. 3f dargestellte Anzeige auf der Anzeigeeinheit 45 des Clients 4 angezeigt.

In Fig. 4c ist ein Ablaufdiagramm 620 mit optionalen Verfahrensschritten einer beispielhaften Ausführungsform des erfindungsgemäßen Verfahrens dargestellt. Die in Ablaufdiagramm 620 enthaltenen Schritte 621-622 können beispielsweise zeitlich nach einem der Verfahrensschritte 607 und 608 des Ablaufdiagramms 600 oder 614 des Ablaufdiagramms 610 und/oder zeitlich vor dem Verfahrensschritt 611 des Ablaufdiagramms 610 ablaufen.

In einem optionalen Schritt 621 können weitere relevante Informationen für die ausgewählten Logistikdatensätze ausgewählt werden. Das Auswählen der weiteren Informationen kann beispielsweise in Abhängigkeit der ausgewählten Logistikdatensätze und des Suchgebiets erfolgen. Zum Beispiel können nur weitere Informationen ausgewählt werden, die einer Position zugeordnet und/oder zuordenbar sind, die in dem Suchgebiet liegt, und die für die ausgewählten Logistikdatensätze relevant sind. Das Auswählen und Anzeigen der weiteren Informationen kann beispielsweise automatisch erfolgen. Das Auswählen und Anzeigen der weiteren Informationen kann beispielsweise aufgrund einer Benutzereingabe erfolgen.

Zum Beispiel sind für die oben genannten ersten ausgewählten Logistikdatensätze Verkehrsinformationen und Wetterinformationen relevant. Zum Beispiel werden nur Verkehrsinformationen, die einer Position in dem Suchgebiet zugeordnet sind, und nur für Positionen entlang der geplanten Routen 508 des LKWs mit Anhänger mit der Fahrgestellnummer 123452 und der geplanten Route 510 des LKWs mit der Fahrgestellnummer 123451 ausgewählt. Des Weiteren werden nur Wetterinformationen, die einer Position in dem Suchgebiet zugeordnet sind, und nur entlang der geplanten Route 511 des Containerschiffs mit der Kennung 12355 ausgewählt. Zum Beispiel liegen nur Verkehrsinformationen für die geplante Route 508 des LKWs vor, nämlich eine Straßensperrung, so dass beispielsweise eine weitere zusätzliche Darstellungsebene für den in Fig. 3b dargestellten Kartenausschnitt 502 mit dem Piktogramm 512 erzeugt wird.

In einem optionalen Schritt 622 können die weiteren relevanten Informationen auf dem angezeigten Kartenausschnitt angezeigt werden. Zum Beispiel wird die in Fig. 3d dargestellte Anzeige auf Anzeigeeinheit 45 des Clients 4 angezeigt.

In Fig. 4d ist ein Ablaufdiagramm 700 mit Verfahrensschritten dargestellt, das beispielsweise abläuft, wenn die in Ablaufdiagramm 600 dargestellten Verfahrenschritte 601 bis 607 in System 1 ausgeführt werden.

In einem Schritt 701 gibt der Benutzer an der Eingabeeinheit 44 des Clients 4 seinen Benutzernamen und sein Passwort für den Suchdiensteanbieter ein.

In einem Schritt 702 sendet der Client diese Authentisierungsdaten (über das Netzwerk 5) an den Server 2A. Der Server 2A empfängt die Authentisierungsdaten und authentifiziert den Benutzer zum Beispiel durch einen Abgleich mit Benutzerdaten in einer Benutzerdatenbank des Suchdiensteanbieters auf Server 2A.

In einem Schritt 703 sendet der Server 2A, wenn er den Benutzer authentifiziert hat, einen Kartenausschnitt an den Client 4. Zum Beispiel wird der in Fig. 3a dargestellte Kartenausschnitt 501 vom Server 2A an den Client 4 als anzeigbare Grafik, beispielsweise als Bilddatei, gesendet. Zum Beispiel wird der Kartenausschnitt 501 standardmäßig an den Client 4 gesendet, wenn sich der Benutzer am Server 2A des Suchdiensteanbieters anmeldet. Alternativ ist beispielsweise denkbar, dass dem Server 2A die Position des Benutzers bekannt ist und der Server 2A einen Kartenausschnitt an den Client 4 sendet, der einen Teil der Erdoberfläche darstellt, innerhalb dessen sich der Benutzer befindet. Zum Beispiel kann der Server 2A die Position des Benutzers orten oder vom Client 4 empfangen.

Der Client 4 empfängt den Kartenausschnitt und zeigt den Kartenausschnitt für den Benutzer in einem Schritt 704 auf der Anzeigeeinheit 45 an.

In einem Schritt 705 kann der Benutzer den angezeigten Kartenausschnitt, wie oben zu Schritt 603 ausgeführt, verändern, zum Beispiel verkleinern, vergrößern und/oder verschieben Wenn den Benutzer zum Beispiel in dem standardmäßigen Kartenausschnitt 501 den vergrößerten in Fig. 3b dargestellten Kartenausschnitt 502 zur Anzeige auswählt, wird in einem Schritt 706 eine entsprechende Kartenausschnittanforderung an den Server 2A gesendet.

Der Server 2A empfängt die Kartenausschnittanforderung und sendet in einem Schritt 707 den vom Benutzer ausgewählten in Fig. 3b dargestellten Kartenausschnitt 502 an den Client. Der Client 4 empfängt den Kartenausschnitt 502 und zeigt den Kartenausschnitt für den Benutzer in einem Schritt 708 auf der Anzeigeeinheit 45 an, wie in Fig. 3b dargestellt.

Alternativ ist auch denkbar, dass der Client die Kartenausschnitte beispielsweise bei einem Server eines externen Kartendiensteanbieters anfordert und von diesem empfängt.

In einem Schritt 709 gibt der Benutzer an der Eingabeinheit 44 des Clients 4 ein Suchkriterium für eine Suchanfrage ein. Wie oben zu Schritt 604 ausgeführt, kann der Benutzer zum Beispiel den trunkierten Suchbegriff "12345*" als Suchkriterium eingeben.

In einem Schritt 710 sendet der Client 4 die Suchanfrage mit dem Suchkriterium an den Server 2A. Anschließend ordnet der Server 2A der Suchanfrage automatisch ein Suchgebiet zu, wie oben zu Schritt 605 ausgeführt. Der Server 2A bestimmt das Suchgebiet dabei aus der letzten von dem Client 4 empfangenen Kartenaüsschnittanforderung oder dem standardmäßigen Kartenausschnitt. Dies ist zum Beispiel der in Fig. 3b dargestellte Kartenausschnitt 502. Die Suchanfrage lautet dann beispielsweise folgendermaßen: "12345* in Last:41.11221 to 41.11110 and Long:56.000 to 56.421".

Alternativ ist denkbar, dass der Client 4 der Suchanfrage automatisch ein Suchgebiet zuordnet, beispielsweise wenn der Client die Kartenausschnitte bei einem Server eines externen Kartendiensteanbieters anfordert und von diesem empfängt.

Des Weiteren wird das vom Benutzer eingegebene Suchkriterium vom Server 2A beispielsweise automatisch derart mit dem Benutzer verknüpft, dass das Ergebnis der Suchanfrage auf Logistikdatensätze beschränkt ist, für dessen Einsicht der Benutzer autorisiert ist. Die Suchanfrage lautet dann beispielsweise folgendermaßen: "12345* in Lat:41.11221 to 41.11110 and Long:56.000 to 56.421 where tracking type equals customer account".

Anschließend wird die Suchanfrage von Server 2A in einem Schritt 711 an den Server 2B und in einem Schritt 712 an den Server 2C gesendet. Die Server 2B und 2C arbeiten die Suchanfrage ab, wie oben zu Schritt 606 ausgeführt, und wählen die ersten Logistikdatensätze aus, auf die das Suchkriterium zutrifft und die einer beweglichen Einheit zugeordnet sind, deren aktuellen Position in dem Suchgebiet liegt. Zum Beispiel wählt der Server 2B die oben genannten ersten Sendungsverfolgungsdatensätze und der Server 2C die oben genannten ersten Telematikdatensätze aus.

In einem Schritt 713 sendet der Server 2B die ersten ausgewählten Sendungsverfolgungsdatensätze an den Server 2A, und in einem Schritt 714 sendet der Server 2C die ersten ausgewählten Telematikdatensätze an den Server 2A. Anschließend erzeugt der Server die Informationen betreffend die ersten ausgewählten Logistikdatensätze als erstes Ergebnis der Suchanfrage, wie oben zu Schritt 606 ausgeführt. Zum Beispiel erzeugt der Server die erste zusätzliche Darstellungsebene als erstes Ergebnis der Suchanfrage.

In einem Schritt 715 sendet der Server 2A die als Ergebnis der Suchanfrage erzeugten ersten Informationen an den Client 4. Zum Beispiel sendet der Server 2A die erste Darstellungsebene als anzeigbare Grafik an den Client 4.

In eine Schritt 716 zeigt der Client die ersten Informationen als Ergebnis der Suchanfrage auf der Anzeigeeinheit 45 an. Zum Beispiel zeigt der Client die in Fig. 3c dargestellte Anzeige auf der Anzeigeeinheit 45 des Clients 4 an.

In Fig. 5 ist ein Blockdiagramm einer beispielhaften Ausführungsform eines Speichermediums 80 dargestellt. Das Speichermedium ist vorzugsweise ein computerlesbares Speichermedium. Das Speichermedium kann insbesondere ein physikalisches und/oder dingliches Speichermedium sein, welches vom zumindest einem der Server 2A, 2B und 2C und/oder dem Client 4 auslesbar ist.

Das Speichermedium 80 umfasst ein Programm 81 mit Programmanweisungen 82. Die Programmanweisungen 82 veranlassen eine Vorrichtung beispielsweise zumindest einige der Schritte der Ablaufdiagramme 600, 610, 620 und/oder 700 zumindest teilweise auszuführen, wenn das Programm auf einem Prozessor der Vorrichtung ausgeführt wird. Zum Beispiel ist das Programm zumindest auf einem der Prozessoren 20 und 40 ausführbar.

Die Abfolge der in dieser Spezifikation geschilderten Verfahrenschritte in den einzelnen Ablaufdiagrammen ist nicht zwingend, alternative Abfolgen der Verfahrensschritte sind innerhalb des durch Anspruch 1 festgelegten Rahmens denkbar. Die Verfahrensschritte können auf verschiedene Art und Weise implementiert werden, so ist eine Implementierung in Saftware (durch Programmanweisungen). Hardware oder eine Kombination von beidem zur Implementierung der Verfahrensschritte denkbar.

## Patentansprüche

1. Verfahren, ausgeführt von zumindest einer Vorrichtung (2A, 2B, 2C, 4), umfassend
- Bereitstellen eines Kartenausschnitts (501, 502, 514) zur Anzeige oder Anzeigen des Kartenausschnitts für einen Benutzer (607),
- Erhalten eines Suchkriteriums für eine Suchanfrage eines Benutzers (604, 709, 710), wobei das Suchkriterium durch eine Benutzereingabe erhalten wird,
- Automatisches Zuordnen eines Suchgebiets zu der Suchanfrage (605), wobei das Suchgebiet aus dem dem Benutzer zum Zeitpunkt der Eingabe des Suchkriteriums angezeigten oder zur Anzeige bereitgestellten Kartenausschnitt (501, 502, 514) bestimmt wird,
- Auswählen von einem oder mehreren Logistikdatensätzen aus einer oder mehreren Datenquetlen in Abhängigkeit zumindest des Suchkriteriums und des Suchgebiets (606, 711, 712, 713, 714), wobei jedem der Logistikdatensätze eine mobile Position zugeordnet oder zuordenbar ist, und wobei nur Logistikdatensätze ausgewählt werden, auf die das Suchkriterium zutrifft und deren zugeordnete oder zuordenbare Position in dem Suchgebiet liegt, und
- Ausgeben von Informationen betreffend die ausgewählten Logistikdatensätze als Ergebnis der Suchanfrage (607, 715, 716).

2. Das Verfahren nach Anspruch 1, wobei der Kartenausschnitt (501, 502, 514) eine bekannte Position des Benutzers beinhaltet.

3. Das Verfahren nach einem der Ansprüche 1 bis 2, wobei der Kartenausschnitt (501, 502, 514) von dem Benutzer wählbar und/oder veränderbar ist (603, 608).

4. Das Verfahren nach einem der Ansprüche 1 bis 3, wobei das Suchgebiet automatisch und derart bestimmt wird, dass das Zentrum des Suchgebiets dem Zentrum des Kartenausschnitts (501, 502, 514) entspricht, und/oder wobei das Suchgebiet automatisch und derart bestimmt wird, dass das Suchgebiet dem (501, 502, 514) Kartenausschnitt entspricht.

5. Das Verfahren nach einem der Ansprüche 1 bis 4, wobei die Informationen (503, 504, 505, 506, 507, 508, 509, 510, 511) betreffend die Logistikdatensätze auf dem Kartenausschnitt (501, 502, 514) jeweils an der dem jeweiligen Logistikdatensatz zugeordneten oder zuordenbaren Position angezeigt werden.

6. Das Verfahren nach Anspruch 5, wobei auf dem Kartenausschnitt (501, 502, 514) weitere für die Logistikdatensätze jeweils relevante Informationen angezeigt werden (621, 622).

7. Das Verfahren nach einem der Ansprüche 1 bis 6, ferner umfassend
- Auswählen von einem oder mehreren weiteren Logistikdatensätzen aus den Datenquellen (2A, 2B) in Abhängigkeit zumindest des Suchkriteriums und des Suchgebiets (611), wobei jedem der weiteren Logistikdatensätze eine mobile Position zugeordnet oder zuordenbar ist, und wobei die weiteren Logistikdatensätze nur dann ausgewählt werden, wenn das Suchkriterium auf sie zutrifft und ihre zugeordnete oder zuordenbare Position nicht in dem Suchgebiet liegt, wobei die weiteren Logistikdatensätze, deren zugeordnete oder zuordenbare Position nicht in dem Suchgebiet liegt, zeitlich nach dem Auswählen der Logistikdatensätze, deren zugeordnete oder zuordenbare Position in dem Suchgebiet liegt, mit geringerer Priorität und/oder im Hintergrund ausgewählt werden, und
- Ausgeben von Informationen (513) betreffend die weiteren Logistikdatensätze (612).

8. Das Verfahren nach einem der Ansprüche 1 bis 7, ferner umfassend
- Automatisches Erweitern des Suchgebiets für die Suchanfrage, wenn kein Logistikdatensatz ausgewählt wurde oder die Anzahl der ausgewählten Logistikdatensätze einen Schwellwert unterschreitet, und/oder
- Automatisches Verkleinern des Suchgebiets für die Suchanfrage, wenn die Anzahl der ausgewählten Logistikdatensätze einen Schwellwert überschreitet.

9. Das Verfahren nach einem der Ansprüche 1 bis 8, wobei das Suchkriterium die auswählbaren Logistikdatensätze zumindest auf dem Benutzer zugeordnete oder zuordenbare Logistikdatensätze beschränkt.

10. Das Verfahren nach einem der Ansprüche 1 bis 9, wobei das Suchkriterium eine von dem Benutzer eingegebene Zeichenfolge umfasst oder aus dieser besteht.

11. Vorrichtung (2A) umfassend Mittel (20-23) zur Ausführung des Verfahrens nach einem der Ansprüche 1 bis 10.

12. System (1, 3) umfassend
- eine oder mehrere Vorrichtungen (2A, 2B, 2C, 4) mit Mitteln zur Ausführung des Verfahrens nach einem der Ansprüche 1 bis 10.

13. Programm (81) umfassend
- Programmanweisungen (82), um das Verfahren nach einem der Ansprüche 1 bis 10 auszuführen, wenn das Programm (81) auf einem Prozessor ausgeführt wird.

## Claims

1. Method, carried out by at least one apparatus (2A, 2B, 2C, 4), comprising
- providing a map extract (501, 502, 514) for display or displaying the map extract for a user (607),
- obtaining a search criterion for a search query of a user (604, 709, 710), wherein the search query is obtained via a user input,
- automatically assigning a search region to the search query (605), wherein the search region is determined from the map extract (501, 502, 514) displayed or provided for display for the user at the time of inputting the search query,
- selecting one or more logistics data records from one or more data sources in dependence on at least the search criterion and the search region (606, 711, 712, 713, 714), wherein a mobile position is assigned or assignable to each of the logistics data records, and wherein only logistics data records are selected to which the search criterion applies and the assigned or assignable position of which is located in the search region, and
- outputting information relating to the selected logistics data records as a result of the search query (607, 715, 716).

2. The method according to Claim 1, wherein the map extract (501, 502, 514) contains a known position of the user.

3. The method according to any one of Claims 1 to 2, wherein the map extract (501, 502, 514) is selectable and/or modifiable by the user (603, 608).

4. The method according to any one of Claims 1 to 3, wherein the search region is determined automatically and in such a way that the centre of the search region corresponds to the centre of the map extract (501, 502, 514), and/or wherein the search region is determined automatically and in such a way that the search region corresponds to the map extract (501, 502, 514).

5. The method according to any one of Claims 1 to 4, wherein the information (503, 504, 505, 506, 507, 508, 509, 510, 511) relating to the logistics data records is displayed on the map extract (501, 502, 514) at the position assigned or assignable to the respective logistics data record, respectively.

6. The method according to Claim 5, wherein further information respectively relevant to the logistics data records is displayed (621, 622) on the map extract (501,502,514).

7. The method according to any one of Claims 1 to 6, further comprising
- selecting one or more further logistics data records from the data sources (2A, 2B) in dependence on at least the search criterion and the search region (611), wherein a mobile position is assigned or assignable to each of the further logistics data records, and wherein the further logistics data records are selected only if the search criterion applies to them and their assigned or assignable position is not located in the search region, wherein the further logistics data records with an assigned or assignable position not lying in the search region are selected with a lower priority and/or in the background, and
- outputting of information (513) relating to the further logistics data records (612).

8. The method according to any one of Claims 1 to 7, further comprising
- automatically extending the search region for the search query if no logistics data record has been selected or the number of selected logistics data records falls below a threshold value, and/or
- automatically reducing the search region for the search query if the number of selected logistics data records exceeds a threshold value.

9. The method according to any one of Claims 1 to 8, wherein the search criterion restricts the selectable logistics data records at least to logistics data records assigned or assignable to the user.

10. The method according to any one of Claims 1 to 9, wherein the search criterion comprises a character sequence inputted by the user or consists thereof.

11. Apparatus (2A), comprising means (20-23) for carrying out the method according to any one of Claims 1 to 10.

12. System (1, 3), comprising
- one or more apparatuses (2A, 2B, 2C, 4) with means for carrying out the method according to any one of Claims 1 to 10.

13. Program (81), comprising
- program instructions (82) for carrying out the method according to any one of Claims 1 to 10, when the program (81) is executed on a processor.

## Revendications

1. Procédé, exécuté par au moins un dispositif (2A, 2B, 2C, 4) comprenant les étapes suivantes consistant à
- fournir une section de carte (501, 502, 514) à afficher ou afficher la section de carte pour un utilisateur (607),
- obtenir un critère de recherche pour une requête de recherche d'un utilisateur (604, 709, 710), dans lequel le critère de recherche est obtenu par une saisie de l'utilisateur,
- attribuer automatiquement une zone de recherche à la requête de recherche (605), dans lequel la zone de recherche est déterminée à partir de la section de carte (501, 502, 514) affichée à l'attention de l'utilisateur ou fournie aux fins de l'affichage, au moment de la saisie du critère de recherche,
- sélectionner un ou plusieurs ensembles de données de logistique parmi une ou plusieurs sources de données en fonction au moins du critère de recherche et de la zone de recherche (606, 711, 712, 713, 714), dans lequel une position mobile est attribuée ou peut être attribuée à chacun des ensembles de données de logistique et dans lequel ne sont sélectionnés que des ensembles de données de logistique, qui correspondent au critère de recherche et dont la position attribuée ou pouvant être attribuée se trouve dans la zone de recherche, et
- dépenser des informations concernant les ensembles de données de logistique sélectionnés en tant que résultant de la requête de recherche (607, 715, 716).

2. Procédé selon la revendication 1, dans lequel la section de carte (501, 502, 514) comporte une position connue de l'utilisateur.

3. Procédé selon l'une quelconque des revendications 1 à 2, dans lequel la section de carte (501, 502, 514) peut être choisie et/ou modifiée (603, 608) par l'utilisateur.

4. Procédé selon l'une quelconque des revendications 1 à 3, dans lequel la zone de recherche est déterminée automatiquement et de telle manière que le centre de la zone de recherche correspond au centre de la section de carte (501, 502, 514), et/ou dans lequel la zone de recherche est déterminée automatiquement et de telle manière que la zone de recherche correspond à la section de carte (501, 502, 514).

5. Procédé selon l'une quelconque des revendications 1 à 4, dans lequel les informations (503, 504, 505, 506, 507, 508, 509, 510, 511) concernant les ensembles de données de logistique sont affichées sur la section de carte (501, 502, 514) respectivement au niveau de la position attribuée ou pouvant être attribuée à l'ensemble de données de logistique respectif.

6. Procédé selon la revendication 5, dans lequel d'autres informations respectivement importantes pour les ensembles de données de logistique sont affichées (621, 622) sur la section de carte (501, 502, 514).

7. Procédé selon l'une quelconque des revendications 1 à 6, comprenant en outre les étapes qui suivent consistant à :
- sélectionner un ou plusieurs autres ensembles de données de logistique parmi les sources de données (2A, 2B) en fonction au moins d'un critère de recherche et de la zone de recherche (611), dans lequel une position mobile est attribuée ou peut être attribuée à chacun des autres ensembles de données de logistique, et dans lequel les autres ensembles de données de logistique ne sont alors sélectionnés que lorsque le critère de recherche correspond à ces derniers et que leur position attribuée ou pouvant être attribuée ne se trouve pas dans la zone de recherche, dans lequel les autres ensembles de données de logistique, dont la position attribuée ou pouvant être attribuée ne se trouve pas dans la zone de recherche, sont sélectionnés avec une priorité plus faible et/ou dans l'arrière-plan après la sélection des ensembles de données de logistique, dont la position attribuée ou pouvant être attribuée se trouve dans la zone de recherche, et
- dépenser des informations (513) concernant les autres ensembles de données de logistique (612).

8. Procédé selon l'une quelconque des revendications 1 à 7, comprenant en outre les étapes suivantes consistant à :
- étendre automatiquement la zone de recherche pour la requête de recherche, lorsqu'aucun ensemble de données de logistique n'a été sélectionné ou que le nombre des ensembles de données de logistique sélectionnés reste inférieur à une valeur seuil, et/ou
- réduire automatiquement la zone de recherche pour la requête de recherche lorsque le nombre des ensembles de données de logistique sélectionné dépasse une valeur seuil.

9. Procédé selon l'une quelconque des revendications 1 à 8, dans lequel le critère de recherche restreint les ensembles de données de logistique sélectionnables au moins aux ensembles de données de logistique attribués ou pouvant être attribués à l'utilisateur.

10. Procédé selon l'une quelconque des revendications 1 à 9, dans lequel le critère de recherche comprend une suite de caractères saisis par l'utilisateur ou en est constitué.

11. Dispositif (2A) comprenant des moyens (20 à 23) servant à exécuter le procédé selon l'une quelconque des revendications 1 à 10.

12. Système (1, 3) comprenant
- un ou plusieurs dispositifs (2A, 2B, 2C, 4) pourvus de moyens servant à exécuter le procédé selon l'une quelconque des revendications 1 à 10.

13. Programme (81) comprenant
- des instructions de programme (82) destiné à exécuter le procédé selon l'une quelconque des revendications 1 à 10 lorsque le programme (81) est exécuté sur un processeur.
